# EUROPEAN PATENT APPLICATION

(11) **EP 4 525 534 A1**
(43) Date of publication of application: **19.03.2025**
(21) Application number: 22941159.0
(22) Date of filing: 12.05.2022
(51) Int. Cl.: H04W 72/04

(54) **RESOURCE CONFIGURATION METHOD AND APPARATUS**

(71) Applicant: Beijing Xiaomi Mobile Software Co., Ltd., Beijing 100085 (CN)
(72) Inventor: ZHAO, Wensu, Beijing 100085 (CN); ZHAO, Qun, Beijing 100085 (CN)
(74) Representative: Hersina, Günter
(86) International application number: PCT/CN2022/092558
(87) International publication number: WO 2023/216203

(57) **Abstract**

Disclosed in the embodiments of the present application are a resource configuration method and apparatus. The method comprises: receiving resource configuration information, which is sent by a network device; and according to the resource configuration information, determining a plurality of time-domain candidate resources and/or at least one frequency-domain candidate resource, wherein the plurality of time-domain candidate resources and/or the at least one frequency-domain candidate resource are/is used for sending a sidelink synchronization signal block (S-SSB). Therefore, a terminal device can determine a plurality of candidate resources and send an S-SSB in the plurality of candidate resources, thereby greatly and effectively increasing the success rate of sending an S-SSB in an unlicensed frequency band, and increasing the system communication efficiency.

## Description

### TECHNICAL FIELD

The invention relates to the field of communication technology, and more particularly, to a method for resource configuration and an apparatus for resource configuration.

### BACKGROUND

In an NR (New Radio) system, in a direct link (SL, also called sidelink) unlicensed frequency band, channel monitoring is performed based on the listen before talk (LBT) mechanism. A sidelink synchronization signal block (S-SSB) can be sent only when the channel is detected to be idle.

In related art, when the sidelink operates in a licensed frequency band, a resource configuration for sending the S-SSB is fixed. When the sidelink operates in an unlicensed frequency band, if the resource for the S-SSB is still configured at a fixed limited resource position, once the LBT fails, the S-SSB cannot be sent. Due to the uncertainty of an LBT result, a transmission success rate of the S-SSB cannot be guaranteed.

### SUMMARY

A first aspect of the embodiments of the present invention provides a method for resource configuration applied to an unlicensed frequency band. The method is performed by a terminal. The method includes:
receiving resource configuration information sent by a network device; and
determining a plurality of time domain candidate resources and/or at least one frequency domain candidate resource according to the resource configuration information;
in which the plurality of time domain candidate resources and/or at least one frequency domain candidate resource are configured to send a sidelink synchronization signal block (S-SSB).

Optionally, determining the plurality of time domain candidate resources according to the resource configuration information includes:
determining the plurality of time domain candidate resources according to time domain resource indication information in the resource configuration information.

Optionally, the time domain resource indication information includes: first time domain resource indication information, second time domain resource indication information and third time domain resource indication information; in which,
the first time domain resource indication information is configured to indicate an offset of a first time domain candidate resource in a plurality of time domain candidate resources within an S-SSB cycle relative to a starting position of the S-SSB cycle;
the second time domain resource indication information is configured to indicate a time interval between each two time domain candidate resources in the plurality of time domain candidate resources within the S-SSB cycle; and
the third time domain resource indication information is configured to indicate a number of time domain candidate resources within the S-SSB cycle, in which the number of the plurality of time domain candidate resources within the S-SSB cycle is greater than a number of S-SSBs supported to be sent with the SSB cycle.

Optionally, a target resource in the plurality of time domain candidate resources and/or at least one frequency domain candidate resource is configured to send the S-SSB, and the method further includes:
monitoring the plurality of time domain candidate resources within the S-SSB cycle;
in which the target resource is at least one idle time domain candidate resource monitored.

Optionally, a number of idle time domain candidate resources monitored is equal to a number of S-SSBs within the S-SSB cycle, and the method further includes:
sending the S-SSBs within the S-SSB cycle on the target resource; and
stopping monitoring remaining time domain candidate resources.

Optionally, a number of idle time domain candidate resources in the plurality of time domain candidate resources is less than a number of S-SSBs within the S-SSB cycle, and the method further includes:
sending a part of the S-SSBs within the S-SSB cycle on the idle time domain candidate resources.

Optionally, the time domain resource indication information includes: first time domain resource indication information, second time domain resource indication information and third time domain resource indication information; in which,
the first time domain resource indication information is configured to indicate an offset of a first time domain candidate resource of a first time domain candidate resource group in a plurality of time domain candidate resource groups within an S-SSB cycle relative to a starting position of the S-SSB cycle, in which a number of time domain candidate resource groups within the S-SSB cycle is equal to a number of S-SSBs supported to be sent within the S-SSB cycle;
the second time domain resource indication information is configured to indicate a time interval between each two time domain candidate resource groups in the plurality of time domain candidate resource groups within the S-SSB cycle; and
the third time domain resource indication information is configured to indicate a number of time domain candidate resources in each time domain candidate resource group within the S-SSB cycle, in which each time domain candidate resource group includes a plurality of consecutive time domain candidate resources, and a number of the plurality of consecutive time domain candidate resources is less than the number of S-SSBs supported to be sent within the S-SSB cycle.

Optionally, a target resource in the plurality of time domain candidate resources and/or at least one frequency domain candidate resource is configured to send the S-SSB, and the method further includes:
monitoring time domain candidate resources in the plurality of time domain candidate resource groups within the S-SSB cycle;
in which the target resource is a first idle time domain candidate resource monitored in each time domain candidate resource group; and
stopping monitoring time domain candidate resources located after the target resource in each time domain candidate resource group.

Optionally, each of the plurality of time domain candidate resource groups has an idle time domain candidate resource, and the method further includes:
sending, on the target resource in each time domain candidate resource group, an S-SSB corresponding to the time domain candidate resource group.

Optionally, the method further includes:
not sending an S-SSB corresponding to a busy time domain candidate resource group, in which each time domain candidate resource in the busy time domain candidate resource group is busy.

Optionally, the time domain resource indication information includes: first time domain resource indication information, second time domain resource indication information, third time domain resource indication information and fourth time domain resource indication information; in which,
the first time domain resource indication information is configured to indicate an offset of a first time domain candidate resource of a first time domain candidate resource group in a plurality of time domain candidate resource groups within an S-SSB cycle relative to a starting position of the S-SSB cycle;
the second time domain resource indication information is configured to indicate a time interval between each two time domain candidate resource groups in the plurality of time domain candidate resource groups within the S-SSB cycle;
the third time domain resource indication information is configured to indicate a number of time domain candidate resources in each time domain candidate resource group within the S-SSB cycle, in which each time domain candidate resource group includes a plurality of consecutive time domain candidate resources, and a number of the plurality of consecutive time domain candidate resources is equal to a number of S-SSBs supported to be sent within the S-SSB cycle; and
the fourth time domain resource indication information is configured to indicate a number of the plurality of time domain candidate resource groups within the S-SSB cycle.

Optionally, a target resource in the plurality of time domain candidate resources and/or at least one frequency domain candidate resource is configured to send the S-SSB, and the method further includes:
monitoring time domain candidate resources in the plurality of time domain candidate resource groups within the S-SSB cycle;
in which the target resource includes a first idle time domain candidate resource monitored and subsequent time domain candidate resources of the first idle time domain candidate resource monitored, in the time domain candidate resources in the plurality of time domain candidate resource groups;
in which a total number of the first idle time domain candidate resource monitored and the subsequent time domain candidate resources is equal to the number of S-SSBs supported to be sent within the S-SSB cycle.

Optionally, the first idle time domain candidate resource monitored is the first time domain candidate resource in the first time domain candidate resource group, and the method further includes:
sending the S-SSBs within the S-SSB cycle on the plurality of consecutive time domain candidate resources in the first time domain candidate resource group; and
stopping monitoring time domain candidate resources in remaining time domain candidate resource groups.

Optionally, the first idle time domain candidate resource monitored is an n^{th} time domain candidate resource in the first time domain candidate resource group, and the method further includes:
sending N-n+1 S-SSBs within the S-SSB cycle consecutively on the n^{th} time domain candidate resource in the first time domain candidate resource group and N-n time domain candidate resources subsequent to the n^{th} time domain candidate resource in the first time domain candidate resource group; in which 1<n<N, n is a positive integer, and N is the number of S-SSBs supported to be sent with the S-SSB cycle;
sending remaining n-1 S-SSBs within the S-SSB cycle consecutively on idle time domain candidate resources monitored in a subsequent time domain candidate resource group; and
stopping monitoring time domain candidate resources in remaining time domain candidate resource groups after the N S-SSBs are sent.

Optionally, the S-SSBs are consecutively sent on a plurality of consecutive time domain candidate resources, and the method further includes:
in the plurality of consecutive time domain candidate resources, not performing listen-before-talk (LBT) on the subsequent time domain candidate resources of the first idle time domain candidate resource monitored.

Optionally, the S-SSBs are consecutively sent on a plurality of consecutive time domain candidate resources, and the method further includes:
in the plurality of consecutive time domain candidate resources, performing listen-before-talk (LBT) on the subsequent time domain candidate resources of the first idle time domain candidate resource monitored.

Optionally, determining the at least one frequency domain candidate resource according to the resource configuration information includes:
determining the at least one frequency domain candidate resource according to frequency domain resource indication information in the resource configuration information.

Optionally, the frequency domain resource indication information includes: first frequency domain resource indication information and second frequency domain resource indication information; in which,
the first frequency domain resource indication information is configured to indicate a frequency interval between each frequency domain candidate resource and a designated frequency domain resource in the at least one frequency domain candidate resource; and
the second time domain resource indication information is configured to indicate a number of frequency domain candidate resources in the at least one frequency domain candidate resource.

Optionally, a target resource in the plurality of time domain candidate resources and/or at least one frequency domain candidate resource is configured to send the S-SSB, and the method further includes:
monitoring the designated frequency domain resource; and
in response to monitoring that the designated frequency domain resource is busy, monitoring the at least one frequency domain candidate resource;
in which the target resource is an idle frequency domain candidate resource monitored.

A second aspect of the embodiments of the present invention provides a method for resource configuration applied to an unlicensed frequency band. The method is performed by a network device, and the method includes:
sending resource configuration information to a terminal;
in which the resource configuration information is configured to determine a plurality of time domain candidate resources and/or at least one frequency domain candidate resource;
the plurality of time domain candidate resources and/or at least one frequency domain candidate resource are configured to send a sidelink synchronization signal block (S-SSB).

Optionally, the resource configuration information includes time domain resource indication information;
the time domain resource indication information is configured to determine the plurality of time domain candidate resources.

Optionally, the time domain resource indication information includes: first time domain resource indication information, second time domain resource indication information and third time domain resource indication information; in which,
the first time domain resource indication information is configured to indicate an offset of a first time domain candidate resource in a plurality of time domain candidate resources within an S-SSB cycle relative to a starting position of the S-SSB cycle;
the second time domain resource indication information is configured to indicate a time interval between each two time domain candidate resources in the plurality of time domain candidate resources within the S-SSB cycle; and
the third time domain resource indication information is configured to indicate a number of the plurality of time domain candidate resources within the S-SSB cycle, in which the number of time domain candidate resources within the S-SSB cycle is greater than a number of S-SSBs supported to be sent within the SSB cycle.

Optionally, the time domain resource indication information includes: first time domain resource indication information, second time domain resource indication information and third time domain resource indication information; in which,
the first time domain resource indication information is configured to indicate an offset of a first time domain candidate resource of a first time domain candidate resource group in a plurality of time domain candidate resource groups within an S-SSB cycle relative to a starting position of the S-SSB cycle, in which a number of time domain candidate resource groups within the S-SSB cycle is equal to a number of S-SSBs supported to be sent within the S-SSB cycle;
the second time domain resource indication information is configured to indicate a time interval between each two time domain candidate resource groups in the plurality of time domain candidate resource groups within the S-SSB cycle; and
the third time domain resource indication information is configured to indicate a number of time domain candidate resources in each time domain candidate resource group within the S-SSB cycle, in which each time domain candidate resource group includes a plurality of consecutive time domain candidate resources, and a number of the plurality of consecutive time domain candidate resources is less than the number of S-SSBs supported to be sent within the S-SSB cycle.

Optionally, the time domain resource indication information includes: first time domain resource indication information, second time domain resource indication information, third time domain resource indication information and fourth time domain resource indication information; in which,
the first time domain resource indication information is configured to indicate an offset of a first time domain candidate resource of a first time domain candidate resource group in a plurality of time domain candidate resource groups within an S-SSB cycle relative to a starting position of the S-SSB cycle;
the second time domain resource indication information is configured to indicate a time interval between each two time domain candidate resource groups in the plurality of time domain candidate resource groups within the S-SSB cycle;
the third time domain resource indication information is configured to indicate a number of time domain candidate resources in each time domain candidate resource group within the S-SSB cycle, in which each time domain candidate resource group includes a plurality of consecutive time domain candidate resources, and a number of the plurality of consecutive time domain candidate resources is equal to a number of S-SSBs supported to be sent within the S-SSB cycle; and
the fourth time domain resource indication information is configured to indicate a number of the plurality of time domain candidate resource groups within the S-SSB cycle.

Optionally, the resource configuration information includes frequency domain resource indication information;
the frequency domain resource indication information is configured to determine the at least one frequency domain candidate resource.

Optionally, the frequency domain resource indication information includes: first frequency domain resource indication information and second frequency domain resource indication information; in which,
the first frequency domain resource indication information is configured to indicate a frequency interval between each frequency domain candidate resource and a designated frequency domain resource in the at least one frequency domain candidate resource; and
the second time domain resource indication information is configured to indicate a number of the frequency domain candidate resources in the at least one frequency domain candidate resource.

A third aspect of the embodiments of the present invention provides an apparatus for resource configuration applied to an unlicensed frequency band. The apparatus is applied to a terminal, and includes:
a transceiver unit, configured to receive resource configuration information sent by a network device; and
a processing unit, configured to determine a plurality of time domain candidate resources and/or at least one frequency domain candidate resource according to the resource configuration information;
in which the plurality of time domain candidate resources and/or at least one frequency domain candidate resource are configured to send a sidelink synchronization signal block (S-SSB).

Optionally, the processing unit is configured to:
determine the plurality of time domain candidate resources according to time domain resource indication information in the resource configuration information.

Optionally, the time domain resource indication information includes: first time domain resource indication information, second time domain resource indication information and third time domain resource indication information; in which,
the first time domain resource indication information is configured to indicate an offset of a first time domain candidate resource in a plurality of time domain candidate resources within an S-SSB cycle relative to a starting position of the S-SSB cycle;
the second time domain resource indication information is configured to indicate a time interval between each two time domain candidate resources in the plurality of time domain candidate resources within the S-SSB cycle; and
the third time domain resource indication information is configured to indicate a number of the plurality of time domain candidate resources within the S-SSB cycle, in which the number of time domain candidate resources within the S-SSB cycle is greater than a number of S-SSBs supported to be sent with the SSB cycle.

Optionally, a target resource in the plurality of time domain candidate resources and/or at least one frequency domain candidate resource is configured to send the S-SSB, and the processing unit is configured to:
monitor the plurality of time domain candidate resources within the S-SSB cycle;
in which the target resource is at least one idle time domain candidate resource monitored.

Optionally, a number of idle time domain candidate resources monitored is equal to a number of S-SSBs within the S-SSB cycle, and the processing unit is further configured to:
send the S-SSBs within the S-SSB cycle on the target resource; and
stop monitoring remaining time domain candidate resources.

Optionally, a number of idle time domain candidate resources in the plurality of time domain candidate resources is less than a number of S-SSBs within the S-SSB cycle, and the processing unit is further configured to:
send a part of the S-SSBs within the S-SSB cycle on the idle time domain candidate resources.

Optionally, the time domain resource indication information includes: first time domain resource indication information, second time domain resource indication information and third time domain resource indication information; in which,
the first time domain resource indication information is configured to indicate an offset of a first time domain candidate resource of a first time domain candidate resource group in a plurality of time domain candidate resource groups within an S-SSB cycle relative to a starting position of the S-SSB cycle, in which a number of time domain candidate resource groups within the S-SSB cycle is equal to a number of S-SSBs supported to be sent within the S-SSB cycle;
the second time domain resource indication information is configured to indicate a time interval between each two time domain candidate resource groups in the plurality of time domain candidate resource groups within the S-SSB cycle; and
the third time domain resource indication information is configured to indicate a number of time domain candidate resources in each time domain candidate resource group within the S-SSB cycle, in which each time domain candidate resource group includes a plurality of consecutive time domain candidate resources, and a number of the plurality of consecutive time domain candidate resources is less than the number of S-SSBs supported to be sent within the S-SSB cycle.

Optionally, a target resource in the plurality of time domain candidate resources and/or at least one frequency domain candidate resource is configured to send the S-SSB, and the processing unit is configured to:
monitor time domain candidate resources in the plurality of time domain candidate resource groups within the S-SSB cycle;
in which the target resource is a first idle time domain candidate resource monitored in each time domain candidate resource group; and
stop monitoring time domain candidate resources located after the target resource in each time domain candidate resource group.

Optionally, each of the plurality of time domain candidate resource groups has an idle time domain candidate resource, and the processing unit is further configured to:
send, on the target resource in each time domain candidate resource group, an S-SSB corresponding to the time domain candidate resource group.

Optionally, the processing unit is further configured to:
not send an S-SSB corresponding to a busy time domain candidate resource group, in which each time domain candidate resource in the busy time domain candidate resource group is busy.

Optionally, the time domain resource indication information includes: first time domain resource indication information, second time domain resource indication information, third time domain resource indication information and fourth time domain resource indication information; in which,
the first time domain resource indication information is configured to indicate an offset of a first time domain candidate resource of a first time domain candidate resource group in a plurality of time domain candidate resource groups within an S-SSB cycle relative to a starting position of the S-SSB cycle;
the second time domain resource indication information is configured to indicate a time interval between each two time domain candidate resource groups in the plurality of time domain candidate resource groups within the S-SSB cycle;
the third time domain resource indication information is configured to indicate a number of time domain candidate resources in each time domain candidate resource group within the S-SSB cycle, in which each time domain candidate resource group includes a plurality of consecutive time domain candidate resources, and a number of the plurality of consecutive time domain candidate resources is equal to a number of S-SSBs supported to be sent within the S-SSB cycle; and
the fourth time domain resource indication information is configured to indicate a number of the plurality of time domain candidate resource groups within the S-SSB cycle.

Optionally, a target resource in the plurality of time domain candidate resources and/or at least one frequency domain candidate resource is configured to send the S-SSB, and the processing unit is configured to:
monitor time domain candidate resources in the plurality of time domain candidate resource groups within the S-SSB cycle;
in which the target resource includes a first idle time domain candidate resource monitored and subsequent time domain candidate resources of the first idle time domain candidate resource monitored, in the time domain candidate resources in the plurality of time domain candidate resource groups;
in which a total number of the first idle time domain candidate resource monitored and the subsequent time domain candidate resources is equal to the number of S-SSBs supported to be sent within the S-SSB cycle.

Optionally, the first idle time domain candidate resource monitored is the first time domain candidate resource in the first time domain candidate resource group, and the processing unit is further configured to:
send the S-SSBs within the S-SSB cycle on the plurality of consecutive time domain candidate resources in the first time domain candidate resource group; and
stop monitoring time domain candidate resources in remaining time domain candidate resource groups.

Optionally, the first idle time domain candidate resource monitored is an n^{th} time domain candidate resource in the first time domain candidate resource group, and the processing unit is further configured to:
send N-n+1 S-SSBs within the S-SSB cycle consecutively on the n^{th} time domain candidate resource in the first time domain candidate resource group and N-n time domain candidate resources subsequent to the n^{th} time domain candidate resource in the first time domain candidate resource group; in which 1<n<N, n is a positive integer, and N is the number of S-SSBs supported to be sent with the S-SSB cycle;
send remaining n-1 S-SSBs within the S-SSB cycle consecutively on idle time domain candidate resources monitored in a subsequent time domain candidate resource group; and
stop monitoring time domain candidate resources in remaining time domain candidate resource groups after the N S-SSBs are sent.

Optionally, the S-SSBs are consecutively sent on a plurality of consecutive time domain candidate resources, and the processing unit is further configured to:
in the plurality of consecutive time domain candidate resources, not perform listen-before-talk (LBT) on the subsequent time domain candidate resources of the first idle time domain candidate resource monitored.

Optionally, the S-SSBs are consecutively sent on a plurality of consecutive time domain candidate resources, and the processing unit is further configured to:
in the plurality of consecutive time domain candidate resources, perform listen-before-talk (LBT) on the subsequent time domain candidate resources of the first idle time domain candidate resource monitored.

Optionally, the processing unit is configured to:
determine the at least one frequency domain candidate resource according to frequency domain resource indication information in the resource configuration information.

Optionally, the frequency domain resource indication information includes: first frequency domain resource indication information and second frequency domain resource indication information; in which,
the first frequency domain resource indication information is configured to indicate a frequency interval between each frequency domain candidate resource and a designated frequency domain resource in the at least one frequency domain candidate resource; and
the second time domain resource indication information is configured to indicate a number of frequency domain candidate resources in the at least one frequency domain candidate resource.

Optionally, a target resource in the plurality of time domain candidate resources and/or at least one frequency domain candidate resource is configured to send the S-SSB, and the processing unit is configured to:
monitor the designated frequency domain resource; and
in response to monitoring that the designated frequency domain resource is busy, monitor the at least one frequency domain candidate resource;
in which the target resource is an idle frequency domain candidate resource monitored.

A fourth aspect of the embodiments of the present disclosure provides an apparatus for resource configuration applied to an unlicensed frequency band. The apparatus is applied to a network device, and includes:
a transceiver unit, configured to send resource configuration information to a terminal;
in which the resource configuration information is configured to determine a plurality of time domain candidate resources and/or at least one frequency domain candidate resource;
the plurality of time domain candidate resources and/or at least one frequency domain candidate resource are configured to send a sidelink synchronization signal block (S-SSB).

Optionally, the resource configuration information includes time domain resource indication information;
the time domain resource indication information is configured to determine the plurality of time domain candidate resources.

Optionally, the time domain resource indication information includes: first time domain resource indication information, second time domain resource indication information and third time domain resource indication information; in which,
the first time domain resource indication information is configured to indicate an offset of a first time domain candidate resource in a plurality of time domain candidate resources within an S-SSB cycle relative to a starting position of the S-SSB cycle;
the second time domain resource indication information is configured to indicate a time interval between each two time domain candidate resources in the plurality of time domain candidate resources within the S-SSB cycle; and
the third time domain resource indication information is configured to indicate a number of the plurality of time domain candidate resources within the S-SSB cycle, in which the number of time domain candidate resources within the S-SSB cycle is greater than a number of S-SSBs supported to be sent within the SSB cycle.

Optionally, the time domain resource indication information includes: first time domain resource indication information, second time domain resource indication information and third time domain resource indication information; in which,
the first time domain resource indication information is configured to indicate an offset of a first time domain candidate resource of a first time domain candidate resource group in a plurality of time domain candidate resource groups within an S-SSB cycle relative to a starting position of the S-SSB cycle, in which a number of time domain candidate resource groups within the S-SSB cycle is equal to a number of S-SSBs supported to be sent within the S-SSB cycle;
the second time domain resource indication information is configured to indicate a time interval between each two time domain candidate resource groups in the plurality of time domain candidate resource groups within the S-SSB cycle; and
the third time domain resource indication information is configured to indicate a number of time domain candidate resources in each time domain candidate resource group within the S-SSB cycle, in which each time domain candidate resource group includes a plurality of consecutive time domain candidate resources, and a number of the plurality of consecutive time domain candidate resources is less than the number of S-SSBs supported to be sent within the S-SSB cycle.

Optionally, the time domain resource indication information includes: first time domain resource indication information, second time domain resource indication information, third time domain resource indication information and fourth time domain resource indication information; in which,
the first time domain resource indication information is configured to indicate an offset of a first time domain candidate resource of a first time domain candidate resource group in a plurality of time domain candidate resource groups within an S-SSB cycle relative to a starting position of the S-SSB cycle;
the second time domain resource indication information is configured to indicate a time interval between each two time domain candidate resource groups in the plurality of time domain candidate resource groups within the S-SSB cycle;
the third time domain resource indication information is configured to indicate a number of time domain candidate resources in each time domain candidate resource group within the S-SSB cycle, in which each time domain candidate resource group includes a plurality of consecutive time domain candidate resources, and a number of the plurality of consecutive time domain candidate resources is equal to a number of S-SSBs supported to be sent within the S-SSB cycle; and
the fourth time domain resource indication information is configured to indicate a number of the plurality of time domain candidate resource groups within the S-SSB cycle.

Optionally, the resource configuration information includes frequency domain resource indication information;
the frequency domain resource indication information is configured to determine the at least one frequency domain candidate resource.

Optionally, the frequency domain resource indication information includes: first frequency domain resource indication information and second frequency domain resource indication information; in which,
the first frequency domain resource indication information is configured to indicate a frequency interval between each frequency domain candidate resource and a designated frequency domain resource in the at least one frequency domain candidate resource; and
the second time domain resource indication information is configured to indicate a number of the frequency domain candidate resources in the at least one frequency domain candidate resource.

A fifth aspect of the embodiments of the present invention provides a communication device. The communication device includes: a processor and a memory for storing a computer program. The processor is configured to execute the computer program stored in the memory, so that the communication device performs the method for resource configuration according to the first aspect of the embodiments.

A sixth aspect of the embodiments of the present invention provides a communication device. The communication device includes: a processor and a memory for storing a computer program. The processor is configured to execute the computer program stored in the memory, so that the communication device performs the method for resource configuration according to the second aspect of the embodiments.

A seventh aspect of the embodiments of the present invention provides a communication device. The communication device includes a processor and an interface circuit. The interface circuit is configured to receive code instructions and transmit the code instructions to the processor; and the processor is configured to run the code instructions to perform the method for resource configuration according to the first aspect of the embodiments.

An eighth aspect of the embodiments of the present invention provides a communication device. The communication device includes a processor and an interface circuit. The interface circuit is configured to receive code instructions and transmit the code instructions to the processor; and the processor is configured to run the code instructions to perform the method for resource configuration according to the second aspect of the embodiments.

A ninth aspect of the embodiments of the present invention provides a computer-readable storage medium for storing instructions. When the instructions are executed, the method for resource configuration according to the first aspect of the embodiments is implemented.

A tenth aspect of the embodiments of the present invention provides a computer-readable storage medium for storing instructions. When the instructions are executed, the method for resource configuration according to the second aspect of the embodiments is implemented.

An eleventh embodiment of the present invention provides a computer program that, when run on a computer, causes the computer to perform the method for resource configuration according to the first aspect of embodiments.

A twelfth aspect embodiment of the present invention provides a computer program that, when run on a computer, causes the computer to perform the method for resource configuration according to the second aspect of the embodiments.

With the method and apparatus for resource configuration provided by embodiments of the present invention, by receiving the resource configuration information sent by the network device, multiple time domain candidate resources and/or at least one frequency domain candidate resource are determined according to the resource configuration information. The multiple time domain candidate resources and/or at least one frequency domain candidate resource are used to send the S-SSB, so that the terminal can determine multiple candidate resources and send S-SSBs in the multiple candidate resources, which can greatly and effectively improve a success rate of transmitting the S-SSBs in the unlicensed frequency band, and improve system communication efficiency.

Additional aspects and advantages of the invention may be partially provided in the following description, which may become apparent from the following description, or may be understood through the practice of the invention.

### BRIEF DESCRIPTION OF THE DRAWINGS

In order to clearly illustrate the technical solution in the embodiments of the invention or the background technologies, a description will be made below to accompanying drawings used in the embodiments of the invention or the background technologies.
FIG. 1 is a structure schematic diagram illustrating a communication system provided by an embodiment of the present invention.
FIG. 2 is a flow chart of a method for resource configuration provided by an embodiment of the present invention.
FIG. 3 is a flow chart of a method for resource configuration provided by an embodiment of the present invention.
FIG. 4a is a schematic diagram illustrating a method for resource configuration provided by an embodiment of the present invention.
FIG. 4b is a schematic diagram illustrating a method for resource configuration provided by an embodiment of the present invention.
FIG. 5 is a flow chart of a method for resource configuration provided by an embodiment of the present invention.
FIG. 6 is a schematic diagram illustrating a method for resource configuration provided by an embodiment of the present invention.
FIG. 7 is a flow chart of a method for resource configuration provided by an embodiment of the present invention.
FIG. 8 is a schematic diagram illustrating a method for resource configuration provided by an embodiment of the present invention.
FIG. 9 is a flow chart of a method for resource configuration provided by an embodiment of the present invention.
FIG. 10 is a flow chart of a method for resource configuration provided by an embodiment of the present invention.
FIG. 11 is a block diagram of an apparatus for resource configuration provided by an embodiment of the present invention.
FIG. 12 is a block diagram of an apparatus for resource configuration provided by an embodiment of the present invention.
FIG. 13 is a block diagram of an apparatus for resource configuration provided by an embodiment of the present invention.
FIG. 14 is a block diagram of a chip provided by an embodiment of the present invention.

### DETAILED DESCRIPTION

Exemplary embodiments will be described in detail herein, examples of which are illustrated in the accompanying drawings. When the following description refers to the drawings, the same numbers in different drawings refer to the same or similar elements unless otherwise indicated. The implementations described in the following embodiments do not represent all implementations consistent with the embodiments of the invention. Rather, they are merely examples of apparatus and methods consistent with aspects of the embodiments of the invention as detailed in the appended claims.

The terminology used in the embodiments of the invention is for the purpose of describing particular embodiments only and is not intended to be limiting of embodiments of the invention. As used in the embodiments of the invention and the appended claims, the singular forms "a," and "the" are intended to include the plural forms as well, unless the context clearly dictates otherwise. It will also be understood that the term "and/or" as used herein refers to and includes any and all possible combinations of one or more of the associated listed items.

It should be understood that although the terms first, second, third, etc. may be used in the embodiments of the invention to describe various information, the information should not be limited to these terms. These terms are only used to distinguish information of the same type from each other. For example, without departing from the scope of the embodiments of the present invention, the first information may also be called second information, and similarly, the second information may also be called first information. Depending on the context, the word "if" as used herein may be interpreted as "when" or "while" or "in response to determining."

Embodiments of the present invention are described in detail below, examples of which are illustrated in the accompanying drawings, in which the same or similar reference numerals refer to the same or similar elements throughout. The embodiments described below with reference to the drawings are exemplary and are intended to explain the present invention, and should not be construed as limiting the present invention.

In order to better understand the method for resource configuration method disclosed in the embodiments of the present invention, a communication system to which the embodiments of the present invention is applicable is described below.

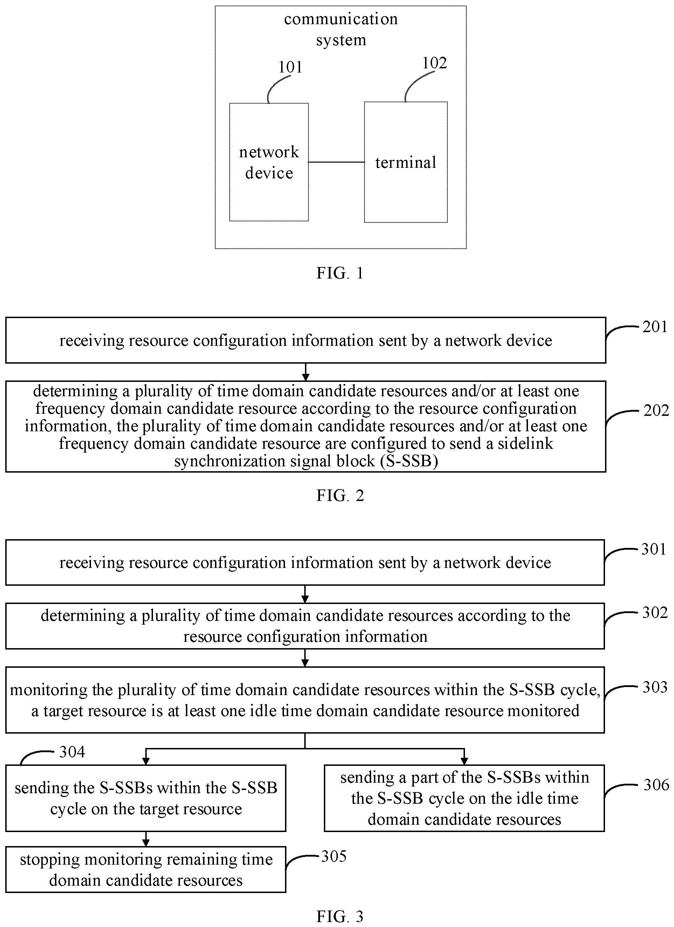

Referring to FIG. 1, FIG. 1 is a structure schematic diagram illustrating a communication system according to an embodiment of the invention. The communication system may include, but is not limited to, a first network device, a second network device, and a terminal. The number and form of devices illustrated in FIG. 1 are only for examples and do not constitute a limitation on embodiments of the invention, and two or more network devices and two or more terminals may be included in practical application. The communication system illustrated in FIG. 1 includes, for example, a network device 101, and a terminal 102.

It should be noted that, the technical solutions according to embodiments of the invention can be applied to various communication systems, such as, a long term evolution (LTE) system, a 5th generation (5G) mobile communication system, a 5G new radio (NR) system, or other future new mobile communication systems.

The network device 101 in embodiments of the invention is an entity on a network side for transmitting or receiving signals. For example, the network device 101 may be an evolved base station (an evolved NodeB, eNB), a transmission reception point (TRP), a next generation NodeB (gNB) in an NR system, a base station in other future mobile communication systems, or an access node in a wireless fidelity (WiFi) system. The specific technology and a specific device form adopted by the network device are not limited in the embodiments of the invention. The network device according to embodiments of the invention may be composed of a central unit (CU) and distributed units (DU). The CU may also be called a control unit. The use of a CU-DU structure allows to separate a protocol layer of the network device, such as a base station, with some functions of the protocol layer placed in the CU for centralized control, and some or all of the remaining functions of the protocol layer distributed in the DUs, which are intensively controlled by the CU.

The terminal 102 in embodiments of the invention is an entity on a user side for receiving or transmitting signals, such as a cellular phone. The terminal may also be referred to as a terminal device, user equipment (UE), a mobile station (MS), a mobile terminal (MT), and the like. The terminal can be a vehicle with a communication function, a smart vehicle, a mobile phone, a wearable device, a Pad, a computer with a wireless transceiver function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. The specific technology and a specific device form adopted by the terminal are not limited in the embodiments of the invention.

In an NR (New Radio) system, in a sidelink licensed frequency band, one sidelink synchronization signal block (S-SSB) cycle supports to send N S-SSBs (sidelink Synchronization Signal Blocks), N>1, and N is a positive integer, one S-SSB occupies one slot, and the network device 101 configures a total of N fixed time domain resources for the N S-SSBs. The terminal 102 may determine the configured N time domain resources through parameters.

In an unlicensed frequency band of the sidelink, the terminal 102 performs channel monitoring based on a listen before talk (LBT) mechanism. A sidelink synchronization signal block (S-SSB) can be sent only when the channel is detected to be idle.

In the related art, when the sidelink operates in a licensed frequency band, a resource configuration for sending the S-SSB is fixed. For example, in NR v2x (vehicle to everything), the resource configuration for the S-SSB is fixed. When the sidelink operates in an unlicensed frequency band, if the resource for the S-SSR is still configured at a fixed and limited resource position, the terminal 102 performs the LBT at the fixed and limited resource position. Once the LBT fails, the S-SSB cannot be sent. Due to the uncertainty of an LBT result, a transmission success rate of the S-SSB cannot be guaranteed.

It can be understood that, the communication system described in the embodiments of the present invention is to more clearly illustrate the technical solutions of the embodiments of the present invention, and does not constitute a limitation on the technical solutions provided by the embodiments of the present invention. As those skilled in the art may know, with the evolution of the system architecture and the emergence of new service scenarios, the technical solutions provided in the embodiments of the invention are also applicable to solve similar technical problems.

The method for resource configuration and the apparatus for resource configuration provided by the invention will be introduced in detail below with reference to the accompanying drawings.

Referring to FIG. 2, FIG. 2 is a flow chart of a method for resource configuration provided by an embodiment of the present invention. It should be noted that the method for resource configuration in embodiments of the present invention is applied to an unlicensed frequency band and is performed by a terminal. The method can be executed independently or in conjunction with any other embodiment of the present invention. As shown in FIG. 2, the method may include the following steps.

At step 201, resource configuration information sent by a network device is received.

In embodiments of the invention, the terminal can receive the resource configuration information sent by the network device, and the resource configuration information is used to determine multiple candidate resources. The multiple candidate resources are used to send sidelink synchronization signal blocks (S-SSBs).

In some implementations, the resource configuration information includes at least one of time domain resource indication information or frequency domain configuration information.

The time domain resource indication information is used to determine multiple time domain candidate resources, and the frequency domain resource indication information is used to determine at least one frequency domain candidate resource.

That is, as a first possible implementation, the resource configuration information includes the time domain resource indication information.

As a second possible implementation, the resource configuration information includes the frequency domain resource indication information.

As a third possible implementation, the resource configuration information includes the time domain resource indication information and the frequency domain configuration information.

At step 202, multiple time domain candidate resources and/or at least one frequency domain candidate resource are determined according to the resource configuration information. The multiple time domain candidate resources and/or at least one frequency domain candidate resource are used to send a sidelink synchronization signal block (S-SSB).

In embodiments of the present invention, the terminal can determine multiple time domain candidate resources and/or at least one frequency domain candidate resource according to the received resource configuration information. The time domain candidate resources and the frequency domain candidate resource are resources used for sending S-SSBs.

As a first possible implementation, the resource configuration information includes the time domain resource indication information, and the terminal can determine multiple time domain candidate resources based on the resource configuration information.

As a second possible implementation, the resource configuration information includes the frequency domain resource indication information, and the terminal can determine at least one frequency domain candidate resource based on the resource configuration information.

As a third possible implementation, the resource configuration information includes the time domain resource indication information and the frequency domain configuration information, and the terminal can determine multiple time domain candidate resources and at least one frequency domain candidate resource based on the resource configuration information.

In some implementations, the multiple candidate resources include a target resource, and the terminal sends the S-SSB on the target resource.

In embodiments of the present invention, the terminal can monitor the time domain/frequency domain candidate resource. It should be noted that, monitoring a resource by the terminal refers to performing LBT on a channel corresponding to the candidate resource.

If the time domain/frequency domain candidate resource is monitored to be idle, that is, the LBT is successful, that is, the channel corresponding to the candidate resource is idle, the time domain/frequency domain candidate resource is the target resource, and the S-SSB can be sent in the time domain/frequency domain candidate resource. If the time domain/frequency domain candidate resource is monitored to be busy, that is, the LBT fails, that is, the channel corresponding to the candidate time domain/frequency domain resource is busy, the S-SSB cannot be sent on the time domain/frequency domain candidate resource. That is, the target resource for sending the S-SSB is at least one idle time domain/frequency domain candidate resource monitored.

In embodiments of the present invention, optionally, frequency domain positions of the multiple time domain candidate resources may be on a designated LBT subband configured by the network device, or may be on at least one frequency domain candidate resource. A frequency of the designated LBT subband is different from a frequency of the at least one frequency domain candidate resource.

In summary, by receiving the resource configuration information sent by the network device, multiple time domain candidate resources and/or at least one frequency domain candidate resource are determined according to the resource configuration information. The multiple time domain candidate resources and/or at least one frequency domain candidate resource are used to send the S-SSB. In this way, the terminal can determine multiple candidate resources and send S-SSBs in the multiple candidate resources, which can greatly and effectively improve a success rate of transmitting the S-SSBs in the unlicensed frequency band, and improve system communication efficiency.

Referring to FIG. 3, FIG. 3 is a flow chart of a method for resource configuration provided by an embodiment of the present invention. It should be noted that the method for resource configuration in embodiments of the present invention is applied to an unlicensed frequency band and is performed by a terminal. The method can be executed independently or in conjunction with any other embodiment of the present invention. As shown in FIG. 3, the method may include the following steps.

At step 301, resource configuration information sent by a network device is received.

In embodiments of the present invention, the resource configuration information includes time domain resource indication information. The terminal can determine multiple time domain candidate resources by receiving the time domain resource indication information.

At step 302, multiple time domain candidate resources are determined according to the resource configuration information.

In embodiments of the present invention, the resource configuration information includes the time domain resource indication information, and the time domain resource indication information includes first time domain resource indication information, second time domain resource indication information and third time domain resource indication information.

The first time domain resource indication information is configured to indicate an offset of a first time domain candidate resource in multiple time domain candidate resources within an S-SSB cycle relative to a starting position of the S-SSB cycle.

The second time domain resource indication information is configured to indicate a time interval between each two time domain candidate resources in the multiple time domain candidate resources within the S-SSB cycle.

The third time domain resource indication information is configured to indicate a number of the plurality of time domain candidate resources within the S-SSB cycle, in which the number of time domain candidate resources within the S-SSB cycle is greater than a number of S-SSBs supported to be sent within the SSB cycle.

That is, in embodiments of the present invention, the network device configures m time domain candidate resources for the terminal within one S-SSB cycle, where m>N, m is a positive integer, and N is the number of S-SSBs supported to be sent within the one S-SSB cycle, N is a positive integer.

Time domain positions of the m time domain candidate resources can be determined through the first time domain resource indication information, the second time domain resource indication information and the third time domain resource indication information.

In some implementations, the first time domain resource indication information may reuse the parameter *sl-timeoffsetssb* in the R16 sidelink, or may be other newly defined parameters. The first time domain resource indication information is used to indicate the offset of the first time domain candidate resource in the m time domain candidate resources within the S-SSB cycle relative to the starting position of the S-SSB cycle.

In some implementations, the second time domain resource indication information may reuse the parameter *sl-timeinterval* in the R16 sidelink, or may be other newly defined parameters. The second time domain resource indication information is used to indicate the time interval between each two time domain candidate resources in the m time domain candidate resources within the S-SSB cycle. Optionally, the unit of the time interval can be a slot, or other granularity units can be selected based on different resource configurations.

The third time domain resource indication information can indicate the number m of the multiple time domain candidate resources within the S-SSB cycle, and the third time domain resource indication information can be a newly defined parameter.

Optionally, a value of m can be predefined by the network device, and the third time domain resource indication information directly indicates the value of m. Or, the value of m can be a value in a preconfigured set, and the third time domain resource indication information can indicate an index in the set.

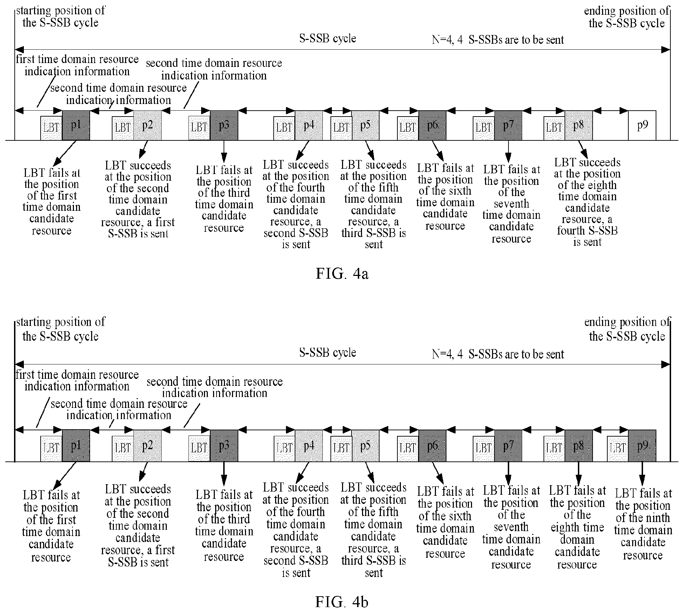

As an example, FIG. 4a is a schematic diagram illustrating a method for resource configuration provided by an embodiment of the present invention. As shown in FIG. 4a, the network device configures m time domain candidate resources for the terminal within one S-SSB cycle. For example, m=9. The number of S-SSBs supported to be sent within one S-SSB cycle is N, for example, N=4.

The first time domain resource indication information is used to indicate the offset of the first time domain candidate resource (resource p1 in the figure) within the S-SSB cycle relative to the starting position of the S-SSB cycle.

The second time domain resource indication information is used to indicate the time interval between every two time domain candidate resources in the m time domain candidate resources within the S-SSB cycle.

In some implementations of the embodiments of the invention, frequency domain positions of the multiple time domain candidate resources are on a designated LBT subband configured by the network device, or may be on at least one frequency domain candidate resource.

At step 303, the multiple time domain candidate resources within the S-SSB cycle are monitored, and a target resource is at least one idle time domain candidate resource monitored.

The target resource is a resource included in the multiple time domain candidate resources and used to send the S-SSB.

In embodiments of the present invention, the terminal monitors the determined multiple time domain candidate resources within the S-SSB cycle. It should be noted that, in embodiments of the present invention, monitoring a resource by the terminal refers to performing LBT on a channel corresponding to the candidate resource.

If the time domain/frequency domain candidate resource is monitored to be idle, that is, the LBT is successful, that is, the channel corresponding to the candidate resource is idle, the time domain/frequency domain candidate resource is the target resource, and the S-SSB can be sent in the time domain/frequency domain candidate resource. If the time domain/frequency domain candidate resource is monitored to be busy, that is, the LBT fails, that is, the channel corresponding to the candidate time domain/frequency domain resource is busy, the S-SSB cannot be sent on the time domain/frequency domain candidate resource. That is, the target resource for sending the S-SSB is at least one idle time domain/frequency domain candidate resource monitored.

It can be understood that, in embodiments of the present invention, only when the terminal monitors that the resource is idle, that is, the LBT is successful, the terminal can perform data transmission on the resource and send the S-SSB.

As an example, as shown in FIG. 4a, the terminal performs LBT on the m time domain candidate resources within the S-SSB cycle. The first time domain candidate resource (resource p1) is monitored to be busy, that is, the LBT fails. The second time domain candidate resource (resource p2) is monitored to be idle, that is, the LBT is successful, and resource p2 is the target resource. Similarly, the LBT fails at the third time domain candidate resource (resource p3), the LBT succeeds at the fourth time domain candidate resource (resource p4) and the fifth time domain candidate resource (resource p5), thus, resource p4 and resource p5 are the target resources. The LBT fails at the sixth time domain candidate resource (resource p6) and the seventh time domain candidate resource (resource p7), the LBT at the eighth time domain candidate resource (resource p8) succeeds, thus, resource p8 is the target resource.

In embodiments of the present invention, if a number of idle time domain candidate resources monitored is equal to a number of S-SSBs supported to be sent within the S-SSB cycle, steps 304 and 305 are executed. If the number of idle time domain candidate resources monitored is less than the number of S-SSBs supported to be sent within the S-SSB cycle, step 306 is executed.

At step 304, the S-SSBs within the S-SSB cycle are sent on the target resource.

At step 305, monitoring remaining time domain candidate resources is stopped.

In embodiments of the present invention, the terminal can send the S-SSBs within the S-SSB cycle on the target resource that is monitored to be idle, i.e., on which the LBT is successful.

In embodiments of the present invention, the number of idle time domain candidate resources monitored is equal to the number of S-SSBs supported to be sent within the S-SSB cycle. That is, after the terminal successfully performs LBT on a certain candidate resource of the multiple time domain candidate resources, the number of time domain candidate resources for which LBT is successful is equal to the number of S-SSBs within the S-SSB cycle. That is, the terminal is able to send all S-SSBs within the S-SSB cycle.

In embodiments of the present invention, since the terminal is able to send all S-SSBs within the S-SSB cycle, if there are remaining time domain candidate resources, the terminal may stop monitoring the remaining time domain candidate resources and may no longer perform LBT on the remaining time domain candidate resources.

As an example, as shown in FIG. 4a, the terminal performs LBT successfully on resource p2, resource p4, resource p5 and resource p8, and sends the S-SSBs within the S-SSB cycle. After the LBT succeeds on resource p8, the number of time domain candidate resources for which LBT is successful is 4, and the terminal is able to send all 4 S-SSBs in this cycle. Thus, the terminal stops monitoring the remaining time domain candidate resources, and may no longer perform LBT on the ninth time domain candidate resource (resource p9).

At step 306, a part of the S-SSBs within the S-SSB cycle are sent on the idle time domain candidate resources.

In embodiments of the present invention, if the number of idle time domain candidate resources monitored is less than the number of S-SSBs supported to be sent within the S-SSB cycle, the terminal sends a part of the S-SSBs within the S-SSB cycle on the idle time domain candidate resources.

As an example, FIG. 4b is a schematic diagram illustrating a method for resource configuration provided by an embodiment of the present invention. As shown in FIG. 4b, the network device configures m time domain candidate resources for the terminal within one S-SSB cycle. For example, m=9. The number of S-SSBs supported to be sent within one S-SSB cycle is N, for example, N=4.

After the terminal performs LBT successfully on resource p2, resource p4 and resource p5 in FIG. 4b, LBT on resource p6, resource p7, resource p8 and resource p9 all fails. That is, the number of idle time domain candidate resources monitored within the S-SSB cycle by the terminal is 3, which is less than the number of S-SSBs within the S-SSB cycle. In this S-SSB cycle, the terminal only sends three S-SSBs on the three idle resources, i.e., resource p2, resource p4 and resource p5, that is, only part of the S-SSBs are sent.

It should be noted that, in steps 304 and 306 of embodiments of the present invention, the S-SSBs that are sent are sent in an order of their sequence numbers within the S-SSB cycle. That is, the first S-SSB is sent on the idle time domain resource (resource p2 in FIG. 4a and FIG. 4b) that is firstly monitored, and the second S-SSB is sent on the second idle time domain resource (resource p4 in FIG. 4a and FIG. 4b) monitored. S-SSB, and so on.

In summary, by receiving the resource configuration information sent by the network device, multiple time domain candidate resources are determined according to the resource configuration information. The multiple time domain candidate resources within the S-SSB cycle are monitored. The target resource is the at least one idle time domain candidate resource monitored. If the number of idle time domain candidate resources monitored is equal to the number of S-SSBs within the S-SSB cycle, the S-SSBs within the S-SSB cycle are sent on the idle time domain candidate resources, and monitoring the remaining time domain candidate resources is stopped. If the number of idle time domain candidate resources monitored is less than the number of S-SSBs within the S-SSB cycle, parts of the S-SSBs within the S-SSB cycle are sent on the idle time domain candidate resources. In this way, the terminal is enabled to determine multiple time domain candidate resources that are more than the number of S-SSBs to be sent, and send the S-SSBs on the multiple time domain candidate resources, which can greatly and effectively improve a success rate of transmitting the S-SSBs in the unlicensed frequency band, and improve system communication efficiency.

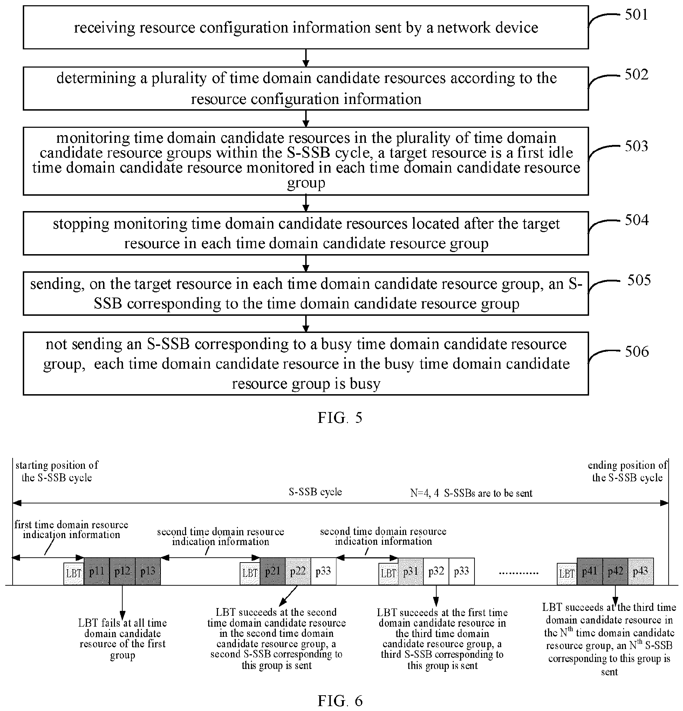

Referring to FIG. 5, FIG. 5 is a flow chart of a method for resource configuration provided by an embodiment of the present invention. It should be noted that the method for resource configuration in embodiments of the present invention is applied to an unlicensed frequency band and is performed by a terminal. The method can be executed independently or in conjunction with any other embodiment of the present invention. As shown in FIG. 5, the method may include the following steps.

At step 501, resource configuration information sent by a network device is received.

In embodiments of the present invention, the resource configuration information includes time domain resource indication information. The terminal can determine multiple time domain candidate resources by receiving the time domain resource indication information.

At step 502, multiple time domain candidate resources are determined according to the resource configuration information.

In embodiments of the present invention, the resource configuration information includes the time domain resource indication information, and the time domain resource indication information includes first time domain resource indication information, second time domain resource indication information and third time domain resource indication information.

The first time domain resource indication information is configured to indicate an offset of a first time domain candidate resource of a first time domain candidate resource group in multiple time domain candidate resource groups within an S-SSB cycle relative to a starting position of the S-SSB cycle, in which a number of time domain candidate resource groups within the S-SSB cycle is equal to a number of S-SSBs supported to be sent within the S-SSB cycle.

The second time domain resource indication information is configured to indicate a time interval between each two time domain candidate resource groups in the multiple time domain candidate resource groups within the S-SSB cycle.

The third time domain resource indication information is configured to indicate a number of time domain candidate resources in each time domain candidate resource group within the S-SSB cycle, in which each time domain candidate resource group includes multiple consecutive time domain candidate resources, and a number of the multiple consecutive time domain candidate resources is less than the number of S-SSBs supported to be sent within the S-SSB cycle.

That is, in embodiments of the present invention, the network device configures N time domain candidate resource groups for the terminal within one S-SSB cycle, and each time domain candidate resource group includes n consecutive time domain candidate resources. N is the number of S-SSBs supported to be sent within one S-SSB cycle, 1<n<N, N is a positive integer, and n is a positive integer. That is, the network device configures a total of N×n time domain candidate resources within the S-SSB cycle.

Time domain positions of the N×n time domain candidate resources can be determined through the first time domain resource indication information, the second time domain resource indication information and the third time domain resource indication information.

In some implementations, the first time domain resource indication information reuse the parameter *sl-timeoffsetssb* in the R16 sidelink, or may be other newly defined parameters. The first time domain resource indication information is used to indicate an offset of a first time domain candidate resource of a first time domain candidate resource group in the N time domain candidate resource groups within the S-SSB cycle relative to a starting position of the S-SSB cycle.

In some implementations, the second time domain resource indication information may reuse the parameter *sl-timeinterval* in the R16 sidelink, or may be other newly defined parameters. The second time domain resource indication information is used to indicate the time interval between each two time domain candidate resource groups in the N time domain candidate resource groups within the S-SSB cycle, i.e., an interval between a last time domain candidate resource of a previous time domain candidate resource group in time domain and a first time domain candidate resource of a following time domain candidate resource group in time domain. Optionally, the unit of the time interval can be a slot, or other granularity units can be selected based on different resource configurations.

The third time domain resource indication information can indicate the number n of consecutive time domain candidate resources in each time domain candidate resource group within the S-SSB cycle. The third time domain resource indication information can be a newly defined parameter.

Optionally, a value of n may be predefined by the network device, and the third time domain resource indication information directly indicates the value of n. Or, the value of n can be a value in a preconfigured set, and the third time domain resource indication information may indicate an index in the set.

As an example, FIG. 6 is a schematic diagram illustrating a method for resource configuration provided by an embodiment of the present invention. As shown in FIG. 6, the network device configures N time domain candidate resource groups for the terminal within one S-SSB cycle. The number of S-SSBs supported to be sent within one S-SSB cycle is N. For example, N=4. Each time domain candidate resource group includes n consecutive time domain candidate resources. For example, n=3.

The first time domain resource indication information is used to indicate the offset of the first time domain candidate resource of the first time domain candidate resource group within the S-SSB cycle relative to the starting position of the S-SSB cycle.

The second time domain resource indication information is used to indicate the time interval between each two time domain candidate resource groups in the N time domain candidate resource groups within the S-SSB cycle, i.e., an interval between a last time domain candidate resource in a previous time domain candidate resource group and a first time domain candidate resource in a next time domain candidate resource group.

In some implementations of embodiments of the invention, frequency domain positions of the multiple time domain candidate resources are on a designated LBT subband configured by the network device, or may be on at least one frequency domain candidate resource.

At step 503, time domain candidate resources in the multiple time domain candidate resource groups within the S-SSB cycle are monitored, a target resource is a first idle time domain candidate resource monitored in each time domain candidate resource group.

The target resource is a resource included in the multiple time domain candidate resources and used to send the S-SSB.

In embodiments of the present invention, the terminal monitors the determined time domain candidate resources in the multiple time domain candidate resource groups within the S-SSB cycle. It should be noted that, in embodiments of the present invention, monitoring a resource by the terminal refers to performing LBT on a channel corresponding to the candidate resource.

For the multiple consecutive time domain candidate resources in each time domain candidate resource group, in some embodiments, the terminal performs LBT on the first time domain candidate resource of each time domain candidate resource group, and does not perform LBT on other time domain candidate resources in the time domain candidate resource group.

In some implementations, the terminal performs LBT on the first time domain candidate resource of each time domain candidate resource group, and may also perform LBT (such as Type2C LBT, etc.) on other time domain candidate resources of the time domain candidate resource group.

It should be noted that, in embodiments of the present invention, each time domain candidate resource group is used to transmit a corresponding S-SSB.

In embodiments of the invention, the first idle time domain candidate resource monitored in each time domain candidate resource group, i.e., a first time domain candidate resource position where LBT is successful in each time domain candidate resource group, is determined as the target resource. That is, the target resource used to send the S-SSB is the first idle time domain candidate resource monitored in each group. For each time domain candidate resource group, the terminal can send an S-SSB corresponding to the time domain candidate resource group on an idle time domain candidate resource in the time domain candidate resource group.

At step 504, monitoring time domain candidate resources located after the target resource in each time domain candidate resource group is stopped.

In embodiments of the present invention, after the terminal monitors an idle time domain candidate resource in each time domain candidate resource group, the terminal may stop monitoring the remaining time domain candidate resources in the time domain candidate resource group.

At step 505, on the target resource in each time domain candidate resource group, an S-SSB corresponding to the time domain candidate resource group is sent.

In embodiments of the present invention, each time domain candidate resource group is used to send a corresponding S-SSB. For each time domain candidate resource group, the terminal can send an S-SSB corresponding to the time domain candidate resource group on a first idle time domain candidate resource monitored in the time domain candidate resource group.

At step 506, an S-SSB corresponding to a busy time domain candidate resource group is not sent, all time domain candidate resources in the busy time domain candidate resource group are busy.

In embodiments of the present invention, if each time domain candidate resource in a time domain candidate resource group is busy, the time domain candidate resource group is called a busy time domain candidate resource group, and the terminal does not send the S-SSB corresponding to the busy time domain candidate resource group.

For example, as shown in FIG. 6, 4 time domain candidate resource groups are configured for the terminal within one S-SSB cycle. The number of S-SSBs supported to be sent within one S-SSB cycle is 4. Each time domain candidate resource group includes three consecutive time domain candidate resources.

If the three time domain candidate resources in the first time domain candidate resource group are all busy for the terminal and LBT fails, an S-SSB (a first S-SSB within the S-SSB cycle) corresponding to the first time domain candidate resource group may not be sent. The terminal fails in LBT at a position of a first time domain candidate resource (resource p21 in the figure) in a second time domain candidate resource group, and succeeds at a position of a second time domain candidate resource (resource p22 in the figure), that is, a first idle time domain candidate resource monitored in the second time domain candidate resource group is the second time domain candidate resource in the second time domain candidate resource group, and the terminal sends an S-SSB (a second S-SSB within the S-SSB cycle) corresponding to the second time domain candidate resource group on the second time domain candidate resource (resource p22 in the figure). The terminal succeeds in LBT at a position of a first time domain candidate resource position in a third time domain candidate resource group, that is, a first idle time domain candidate resource monitored in the third time domain candidate resource group is the first time domain candidate resource (resource p31 in the figure) in the third time domain candidate resource group, the terminal sends an S-SSB (a third S-SSB within the S-SSB cycle) corresponding to the third time domain candidate resource group on the first time domain candidate resource (resource p31 in the figure). Similarly, the terminal succeeds in LBTs at a position of a third time domain candidate resource (resource p43 in the figure) in a fourth time domain candidate resource group, that is, a first idle time domain candidate resource monitored in the fourth time domain candidate resource group is the third time domain candidate resource in the fourth time domain candidate resource group, and the terminal sends an S-SSB (a fourth S-SSB within the cycle) corresponding to the fourth time domain candidate resource group on the third time domain candidate resource (resource p43 in the figure).

It can be understood that, in embodiments of the present invention, if each time domain candidate resource group has an idle time domain candidate resources monitored, all S-SSBs within the S-SSB cycle can be sent. If there is a busy time domain candidate resource group, only part of the S-SSBs can be sent within the S-SSB cycle, and the S-SSB corresponding to the busy time domain candidate resource group may not be sent.

In summary, by receiving the resource configuration information sent by the network device, multiple time domain candidate resources are determined according to the resource configuration information, and the time domain candidate resources in the multiple time domain candidate resource groups within the S-SSB cycle are monitored. The target resource is the first idle time domain candidate resource monitored in each time domain candidate resource group. Monitoring the time domain candidate resources located after the target resource in each time domain candidate resource group is stopped. In each time domain candidate resource group, the S-SSB corresponding to the time domain candidate resource group is sent on the target resource. Each time domain candidate resource in the busy time domain candidate resource group is busy. In this way, the terminal can determine multiple time domain candidate resources and send the S-SSBs on the multiple time domain candidate resources, which can greatly and effectively improve a success rate of transmitting the S-SSBs in the unlicensed frequency band, and improve system communication efficiency.

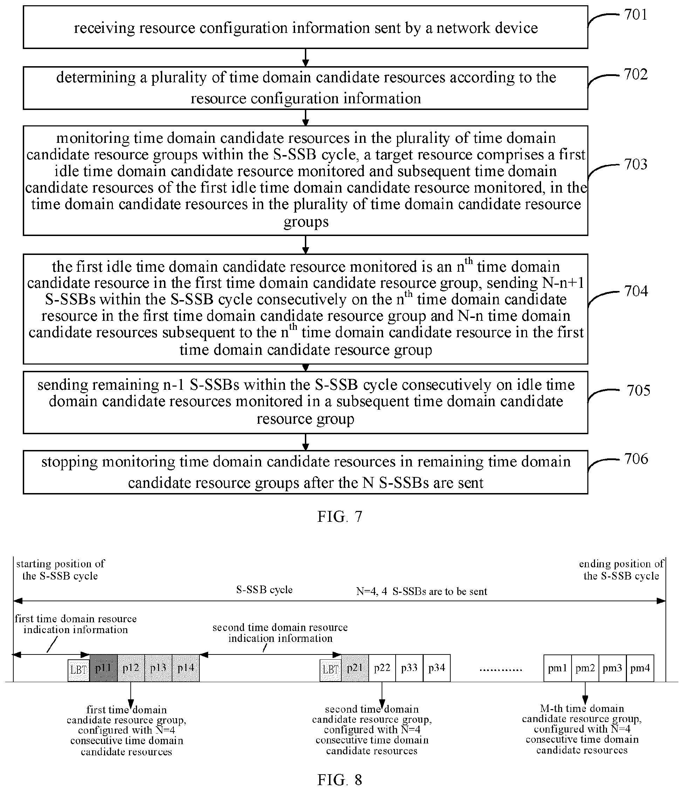

Referring to FIG. 7, FIG. 7 is a flow chart of a method for resource configuration provided by an embodiment of the present invention. It should be noted that the method for resource configuration in embodiments of the present invention is applied to an unlicensed frequency band and is performed by a terminal. The method can be executed independently or in conjunction with any other embodiment of the present invention. As shown in FIG. 7, the method may include the following steps.

At step 701, resource configuration information sent by a network device is received.

In embodiments of the present invention, the resource configuration information includes time domain resource indication information. The terminal can determine multiple time domain candidate resources by receiving the time domain resource indication information.

At step 702, multiple time domain candidate resources are determined according to the resource configuration information.

In embodiments of the present invention, the resource configuration information includes the time domain resource indication information, and the time domain resource indication information includes: first time domain resource indication information, second time domain resource indication information, third time domain resource indication information, and fourth time domain resource indication information.

The first time domain resource indication information is configured to indicate an offset of a first time domain candidate resource of a first time domain candidate resource group in multiple time domain candidate resource groups within an S-SSB cycle relative to a starting position of the S-SSB cycle.

The second time domain resource indication information is configured to indicate a time interval between each two time domain candidate resource groups in the multiple time domain candidate resource groups within the S-SSB cycle.

The third time domain resource indication information is configured to indicate a number of time domain candidate resources in each time domain candidate resource group within the S-SSB cycle, in which each time domain candidate resource group includes multiple consecutive time domain candidate resources, and a number of the multiple consecutive time domain candidate resources is equal to a number of S-SSBs supported to be sent within the S-SSB cycle.

The fourth time domain resource indication information is configured to indicate a number of multiple time domain candidate resource groups within the S-SSB cycle.

That is, in embodiments of the present invention, the network device configures m time domain candidate resource groups for the terminal within one S-SSB cycle, and each time domain candidate resource group includes N consecutive time domain candidate resources. N is the number of S-SSBs supported to be sent within one S-SSB cycle, N is a positive integer, m>1, and m is a positive integer. That is, the network device configures a total of m×N time domain candidate resources within the S-SSB cycle.

Time domain positions of the m×N time domain candidate resources can be determined through the first time domain resource indication information, the second time domain resource indication information, the third time domain resource indication information and the fourth time domain resource indication information.

In some implementations, the first time domain resource indication information may reuse the parameter *sl-timeoffsetssb* in the R16 sidelink, or may be other newly defined parameters. The first time domain resource indication information is used to indicate an offset of a first time domain candidate resource of a first time domain candidate resource group in the m time domain candidate resource groups within the S-SSB cycle relative to a starting position of the S-SSB cycle

In some implementations, the second time domain resource indication information may reuse the parameter *sl-timeinterval* in the R16 sidelink, or may be other newly defined parameters. The second time domain resource indication information is used to indicate the time interval between each two time domain candidate resource groups in the m time domain candidate resource groups within the S-SSB cycle, i.e., an interval between a last time domain candidate resource of a previous time domain candidate resource group in time domain and a first time domain candidate resource of a following time domain candidate resource group in time domain. Optionally, the unit of the time interval can be a slot, or other granularity units can be selected based on different resource configurations

The third time domain resource indication information can indicate the number m of consecutive time domain candidate resources in each time domain candidate resource group within the S-SSB cycle. The third time domain resource indication information can be a newly defined parameter.

In some embodiments, the number of consecutive time domain candidate resources in each time domain candidate resource group within the S-SSB cycle is the same as the number of S-SSBs supported to be sent within the S-SSB cycle, thus, if the time domain resource indication information may not include the third time domain resource indication information, the terminal is still able to determine the number of consecutive time domain candidate resources in each time domain candidate resource group.

The fourth time domain resource indication information can indicate the number m of the multiple time domain candidate resource groups within the S-SSB cycle, and the fourth time domain resource indication information can be a newly defined parameter.

Optionally, a value of m may be predefined by the network device, and the fourth time domain resource indication information directly indicates the value of m. Or the value of n may be a value in a preconfigured set, and the fourth time domain resource indication information may indicate n index in the set.

As an example, FIG. 8 is a schematic diagram illustrating a method for resource configuration provided by an embodiment of the present invention. As shown in FIG. 8, the network device configures m time domain candidate resource groups for the terminal within one S-SSB cycle. Each time domain candidate resource group includes N consecutive time domain candidate resources, and the number of S-SSBs supported to be sent within one S-SSB cycle is N. For example, N=4.

The first time domain resource indication information is used to indicate the offset of the first time domain candidate resource of the first time domain candidate resource group within the S-SSB cycle relative to the starting position of the S-SSB cycle.

The second time domain resource indication information is used to indicate the time interval between each two time domain candidate resource groups in the m time domain candidate resource groups within the S-SSB cycle, i.e., an interval between a last time domain candidate resource in a previous time domain candidate resource group and a first time domain candidate resource in a next time domain candidate resource group.

In some implementations of embodiments of the invention, frequency domain positions of the multiple time domain candidate resources may be on a designated LBT subband configured by the network device, or may be on at least one frequency domain candidate resource.

At step 703, time domain candidate resources in the multiple time domain candidate resource groups within the S-SSB cycle are monitored, a target resource includes a first idle time domain candidate resource monitored and subsequent time domain candidate resources of the first idle time domain candidate resource monitored, in the time domain candidate resources in the multiple time domain candidate resource groups.

The target resource is a resource included in the multiple time domain candidate resources and used to send the S-SSB. The number of target resources (i.e., a total number of the first idle time domain candidate resource monitored and subsequent time domain candidate resources of the first idle time domain candidate resource monitored) is equal to the number N of S-SSBs supported to be sent within the S-SSB cycle.

In embodiments of the present disclosure, the terminal monitors the determined time domain candidate resources in the multiple time domain candidate resource groups within the S-SSB cycle. It should be noted that, in embodiments of the present invention, monitoring a resource by the terminal refers to performing LBT on a channel corresponding to the candidate resource.

For the multiple consecutive time domain candidate resources in each time domain candidate resource group, in some embodiments, the terminal performs LBT on a first time domain candidate resource in each time domain candidate resource group, and does not perform LBT on other time domain candidate resources in the time domain candidate resource group.

In some implementations, the terminal performs LBT on the first time domain candidate resource in each time domain candidate resource group, and may also perform LBT (such as Type2C LBT, etc.) on other time domain candidate resources in the time domain candidate resource group.

It should be noted that, in embodiments of the present invention, each time domain candidate resource group is used to transmit a corresponding S-SSB.

In embodiments of the present invention, the first idle time domain candidate resource monitored in the multiple time domain candidate resource groups, i.e., a first time domain candidate resource position where LBT is successful in the multiple time domain candidate resource groups, and N-1 time domain candidate resources following the first idle time domain candidate resource monitored are used as target resources for sending S-SSBs. The terminal can send S-SSBs on the target resources.

At step 704, the first idle time domain candidate resource monitored is an n^{th} time domain candidate resource in the first time domain candidate resource group, N-n+1 S-SSBs within the S-SSB cycle are consecutively sent on the n^{th} time domain candidate resource in the first time domain candidate resource group and N-n time domain candidate resources subsequent to the n^{th} time domain candidate resource in the first time domain candidate resource group.

Where, 1<n<N, n is a positive integer, and N is the number of S-SSBs supported to be sent within the S-SSB cycle.

In embodiments of the present invention, if the first idle time domain candidate resource monitored by the terminal is the n^{th} time domain candidate resource in the first time domain candidate resource group, the terminal may consecutively send the N-n+1 S-SSBs within the S-SSB cycle on the n^{th} time domain candidate resource in the first time domain candidate resource group and the N-n time domain candidate resources subsequent to the n^{th} time domain candidate resource in the first time domain candidate resource group.

That is, the first idle time domain candidate resource monitored in the multiple time domain candidate resource groups by the terminal is the n^{th} time domain candidate resource in the first time domain candidate resource group, and the terminal may consecutively send the N-n+1 S-SSBs within the S-SSB cycle on resources starting from the n^{th} time domain candidate resource in the first time domain candidate resource group.

It can be understood that, in some implementations, if the first idle time domain candidate resource monitored by the terminal is the first time domain candidate resource in the first time domain candidate resource group, the terminal can consecutively send all N S-SSBs within the S-SSB cycle in the first time domain candidate resource group. The terminal may stop monitoring the time domain candidate resources in the remaining time domain candidate resource groups.

It should be noted that, in embodiments of the present invention, the first time domain resource group is not necessarily the first one of the multiple time domain resource groups.

In some embodiments, in the N-n+1 consecutive time domain candidate resources (the n^{th} time domain candidate resource in the first time domain candidate resource group, and the subsequent N-n time domain candidate resources of the n^{th} time domain candidate resource in the first time domain candidate resource group), the terminal may not perform LBT on the subsequent N-n time domain candidate resources.

In some embodiments, in the N-n+1 consecutive time domain candidate resources (the n^{th} time domain candidate resource in the first time domain candidate resource group, and the subsequent N-n time domain candidate resources of the n^{th} time domain candidate resource in the first time domain candidate resource group), the terminal can perform LBT (such as Type2C LBT, etc.) on the subsequent N-n time domain candidate resources.

At step 705, remaining n-1 S-SSBs within the S-SSB cycle are consecutively sent on idle time domain candidate resources monitored in a subsequent time domain candidate resource group.

In embodiments of the present invention, after the terminal sends the N-n+1 S-SSBs within the S-SSB cycle on the first time domain candidate resource group, the terminal can monitor time domain candidate resources in subsequent time domain candidate resource groups of the first time domain candidate resource group.

The terminal can consecutively send the remaining n-1 S-SSBs within the S-SSB cycle on idle time domain candidate resources monitored in subsequent time domain candidate resource groups.

At step 706, monitoring time domain candidate resources in the remaining time domain candidate resource groups is stopped after the N S-SSBs are sent.

After the N S-SSBs are sent, the terminal may stop monitoring the time domain candidate resources in the remaining time domain candidate resource groups.

For example, as shown in FIG. 8, the network device configures m time domain candidate resource groups for the terminal within one S-SSB cycle. Each time domain candidate resource group includes 4 consecutive time domain candidate resources. The number of S-SSBs supported to be sent within one S-SSB cycle is 4.

In the first time domain candidate resource group, if the terminal fails to perform LBT at a position of a first candidate resource (resource p11 in the figure) and succeeds at a position of a second time domain candidate resource (resource p12 in the figure), a first idle time domain candidate resource monitored by the terminal is the second time domain candidate resource in the first time domain candidate resource group. If the terminal consecutively sends 3 S-SSBs on the second time domain candidate resource (resource p12 in the figure), a third time domain candidate resource (resource p13 in the figure), and a fourth time domain candidate resource (resource p14 in the figure) in the first time domain candidate resource group, and performs LBT successfully at a first candidate resource (resource p21 in the figure) in the domain candidate resource group, the terminal sends remaining 1 S-SSB within the S-SSB cycle on the first time domain candidate resource (resource p21 in the figure) in the second time domain candidate resource group. The terminal sends a total of 4 S-SSBs. LBT may not be performed on the remaining time domain candidate resources, and the remaining time domain candidate resources may not be used.

It can be understood that if the terminal does not send all remaining S-SSBs on the second time domain candidate resource group, the terminal may continue to monitor the time domain candidate resources in the subsequent time domain candidate resource groups.

In summary, by receiving the resource configuration information sent by the network device, multiple time domain candidate resources are determined based on the resource configuration information, and the time domain candidate resources in the multiple time domain candidate resource groups within the S-SSB cycle are monitored. The first idle time domain candidate resource monitored is the n^{th} time domain candidate resource in the first time domain candidate resource group. N-n+1 S-SSBs within the S-SSB cycle are consecutively sent on the n^{th} time domain candidate resource in the first time domain candidate resource group, and the N-n subsequent time domain candidate resources of the n^{th} time domain candidate resource in the first time domain candidate resource group, and the remaining n-1 S-SSBs within the S-SSB cycle are consecutively sent on idle time domain candidate resources monitored in subsequent time domain candidate resource groups. After the N S-SSBs are sent, monitoring the time domain candidate resources in the remaining time domain candidate resource groups is stopped. In this way, the terminal can determine multiple time domain candidate resources and send the S-SSBs on the multiple time domain candidate resources, which can greatly and effectively improve a success rate of transmitting the S-SSBs in the unlicensed frequency band, and improve system communication efficiency.

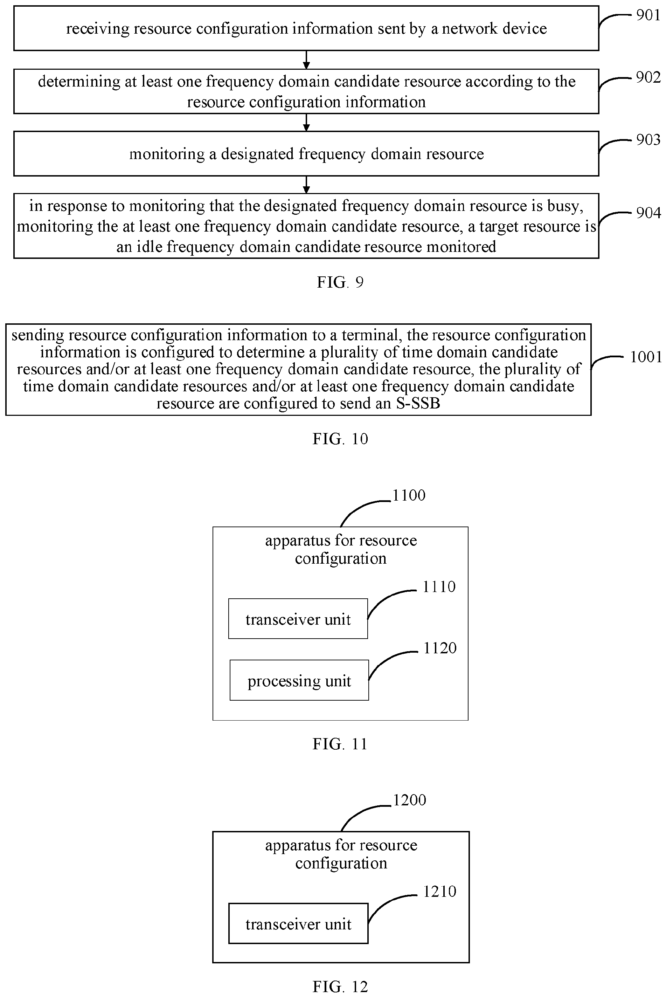

Referring to FIG. 9, FIG. 9 is a flow chart of a method for resource configuration provided by an embodiment of the present invention. It should be noted that the method for resource configuration in embodiments of the present invention is applied to an unlicensed frequency band and is performed by a terminal. The method can be executed independently or in conjunction with any other embodiment of the present invention. As shown in FIG. 9, the method may include the following steps.

At step 901, resource configuration information sent by a network device is received.

In embodiments of the present invention, the resource configuration information includes frequency domain resource indication information. The terminal can determine at least one frequency domain candidate resource by receiving the frequency domain resource indication information.

At step 902, at least one frequency domain candidate resource is determined according to the resource configuration information.

In embodiments of the present invention, the resource configuration information includes the frequency domain resource indication information, and the frequency domain resource indication information includes first frequency domain resource indication information and second frequency domain resource indication information.

The first frequency domain resource indication information is configured to indicate a frequency interval between each frequency domain candidate resource and a designated frequency domain resource in the at least one frequency domain candidate resource. Optionally, a unit of the frequency interval may be 20MHz, or other granularity units can be selected according to different resource configurations.

The second time domain resource indication information is configured to indicate a number of frequency domain candidate resources in the at least one frequency domain candidate resource.

The designated frequency domain resource is configured by the network device, and the terminal performs an S-SSB transmission on a LBT subband with a specified sequence number.

That is, in embodiments of the present invention, the network device can configure M frequency domain candidate resources for the terminal, where M is a positive integer. Frequency domain positions of the M frequency domain candidate resources can be determined through the first frequency domain resource indication information and the second frequency domain resource indication information.

In some implementations, the first frequency domain resource indication information may be other newly defined parameters, and may be used to indicate a frequency interval between each frequency domain candidate resource and a designated frequency domain resource in the M frequency domain candidate resource. Optionally, a unit of the frequency interval may be 20MHz, or other granularity units can be selected according to different resource configurations.

In some implementations, the second time domain resource indication information may be other newly defined parameters, and may be used to indicate the number M of the frequency domain candidate resources.

Optionally, a value of M may be predefined by the network device, and the second frequency domain resource indication information directly indicates the value of M. Or the value of M may be a value in a preconfigured set, and the second frequency domain resource indication information may indicate an index in the set.

At step 903, the designated frequency domain resource is monitored.

In embodiments of the present invention, the terminal can monitor designated reputation resources. It should be noted that in embodiments of the present invention, monitoring resources by the terminal refers to performing LBT on the channel corresponding to the candidate resource.

In the embodiments of the invention, in the designated frequency domain resources, the time domain resources may be configured using the time domain candidate method for resource configuration in any embodiment of the invention, or other configuration methods may be used, such as fixed time domain resources. Configuration, etc., are not limited here.

At step 904, in response to monitoring that the designated frequency domain resource is busy, the at least one frequency domain candidate resource is monitored, a target resource is an idle frequency domain candidate resource monitored.

The target resource is a resource included in the at least one frequency domain candidate resource and used for transmitting an S-SSB.

In embodiments of the present invention, if the terminal monitors that the designated frequency domain resource is busy and LBT fails, the terminal monitors the at least one frequency domain candidate resource.

If the LBT is successful on a frequency domain candidate resource, the terminal can send the S-SSB on the idle frequency domain candidate resource monitored.

In embodiments of the present invention, in the at least one frequency domain candidate resource, time domain resource configuration may adopt a method for time domain candidate resource configuration in any embodiment of the present invention, or other configuration methods may be used, such as a fixed time domain resource configuration, etc. which is not limited here.

For example, the terminal sends an S-SSB on a designated LBT subband with sequence number 0. The network device configures two candidate LBT subbands for the terminal, with sequence numbers 1 and 2. If LBT fails on the LBT subband with sequence number 0, the terminal can perform LBT on the LBT subbands with sequence numbers 1 and 2. If the LBT succeeds, the terminal can send an S-SSB on an LBT subband on which the LBT succeeds.

In summary, by receiving the resource configuration information sent by the network device, at least one frequency domain candidate resource is determined according to the resource configuration information, and the designated frequency domain resource is monitored. If it is monitored that the designated frequency domain resource is busy, the at least one frequency domain candidate resource is monitored. The target resource is the idle frequency domain candidate resource monitored. In this way, the terminal can determine multiple time domain candidate resources and send the S-SSBs on the multiple time domain candidate resources, which can greatly and effectively improve a success rate of transmitting the S-SSBs in the unlicensed frequency band, and improve system communication efficiency.

Referring to FIG. 10, FIG. 10 is a flow chart of a method for resource configuration provided by an embodiment of the present invention. It should be noted that the method for resource configuration in embodiments of the present invention is applied to an unlicensed frequency band and is performed by a network device. The method can be executed independently or in conjunction with any other embodiment of the present invention. As shown in FIG. 10, the method may include the following steps.

At step 1001, resource configuration information is sent to a terminal, the resource configuration information is used to determine multiple time domain candidate resources and/or at least one frequency domain candidate resource, the multiple time domain candidate resources and/or at least one frequency domain resource are used to send an S-SSB.

In embodiments of the invention, the network device can send the resource configuration information to the terminal, and the resource configuration information is used to determine multiple candidate resources. The multiple candidate resources are used to send the S-SSB.

In some implementations, the resource configuration information includes at least one of time domain resource indication information and frequency domain configuration information.

The time domain resource indication information is used to determine multiple time domain candidate resources, and the frequency domain resource indication information is used to determine at least one frequency domain candidate resource.

That is, as a first possible implementation, the resource configuration information includes the time domain resource indication information, and the terminal can determine multiple time domain candidate resources based on the resource configuration information.

As a second possible implementation, the resource configuration information includes the frequency domain resource indication information, and the terminal can determine at least one frequency domain candidate resource based on the resource configuration information.

As a third possible implementation, the resource configuration information includes the time domain resource indication information and the frequency domain configuration information, and the terminal can determine multiple time domain candidate resources and at least one frequency domain candidate resource based on the resource configuration information.

In some implementations, the multiple candidate resources include a target resource, and the terminal sends the S-SSB on the target resource.

In embodiments of the present invention, optionally, frequency domain positions of the multiple time domain candidate resources may be on a designated LBT subband configured by the network device, or may be on at least one frequency domain candidate resource. A frequency of the designated LBT subband is different from a frequency of the at least one frequency domain candidate resource.

In some implementations, the time domain resource indication information includes first time domain resource indication information, second time domain resource indication information and third time domain resource indication information.

The first time domain resource indication information is configured to indicate an offset of a first time domain candidate resource in multiple time domain candidate resources within an S-SSB cycle relative to a starting position of the S-SSB cycle.

The second time domain resource indication information is configured to indicate a time interval between each two time domain candidate resources in the multiple time domain candidate resources within the S-SSB cycle.

The third time domain resource indication information is configured to indicate a number of the plurality of time domain candidate resources within the S-SSB cycle, in which the number of time domain candidate resources within the S-SSB cycle is greater than a number of S-SSBs supported to be sent within the SSB cycle.

In some implementations, the time domain resource indication information includes first time domain resource indication information, second time domain resource indication information and third time domain resource indication information.

The first time domain resource indication information is configured to indicate an offset of a first time domain candidate resource of a first time domain candidate resource group in multiple time domain candidate resource groups within an S-SSB cycle relative to a starting position of the S-SSB cycle, in which a number of time domain candidate resource groups within the S-SSB cycle is equal to a number of S-SSBs supported to be sent within the S-SSB cycle.

The second time domain resource indication information is configured to indicate a time interval between each two time domain candidate resource groups in the multiple time domain candidate resource groups within the S-SSB cycle.

The third time domain resource indication information is configured to indicate a number of time domain candidate resources in each time domain candidate resource group within the S-SSB cycle, in which each time domain candidate resource group includes multiple consecutive time domain candidate resources, and a number of the multiple consecutive time domain candidate resources is less than the number of S-SSBs supported to be sent within the S-SSB cycle.

In some implementations, the time domain resource indication information includes first time domain resource indication information, second time domain resource indication information, third time domain resource indication information and fourth time domain resource indication information.

The first time domain resource indication information is configured to indicate an offset of a first time domain candidate resource of a first time domain candidate resource group in multiple time domain candidate resource groups within an S-SSB cycle relative to a starting position of the S-SSB cycle.

The second time domain resource indication information is configured to indicate a time interval between each two time domain candidate resource groups in the multiple time domain candidate resource groups within the S-SSB cycle.

The third time domain resource indication information is configured to indicate a number of time domain candidate resources in each time domain candidate resource group within the S-SSB cycle, in which each time domain candidate resource group includes multiple consecutive time domain candidate resources, and a number of the multiple consecutive time domain candidate resources is equal to a number of S-SSBs supported to be sent within the S-SSB cycle.

The fourth time domain resource indication information is configured to indicate a number of multiple time domain candidate resource groups within the S-SSB cycle.

In some implementations, the frequency domain resource indication information includes: first frequency domain resource indication information and second frequency domain resource indication information.

The first frequency domain resource indication information is configured to indicate a frequency interval between each frequency domain candidate resource and a designated frequency domain resource in the at least one frequency domain candidate resource.

The second time domain resource indication information is configured to indicate a number of frequency domain candidate resources in the at least one frequency domain candidate resource.

In summary, by sending the resource configuration information to the terminal, the resource configuration information is used to determine multiple time domain candidate resources and/or at least one frequency domain candidate resource. The multiple time domain candidate resources and/or at least one frequency domain candidate resources are used to send the S-SSB. In this way, the terminal can determine multiple time domain candidate resources and send the S-SSBs on the multiple time domain candidate resources, which can greatly and effectively improve a success rate of transmitting the S-SSBs in the unlicensed frequency band, and improve system communication efficiency.

Corresponding to the method for resource configuration provided by the above-mentioned embodiments, the present invention also provides an apparatus for resource configuration. Since the apparatus for resource configuration provided by embodiments of the present invention corresponds to the method provided by the above-mentioned embodiments, the implementation of the method for resource configuration is also applicable to the apparatus for resource configuration provided in the following embodiments, and will not be described in detail in the following embodiments.

Referring to FIG. 11, FIG. 11 is a block diagram of an apparatus for resource configuration provided by an embodiment of the present invention.

As shown in FIG. 11, the apparatus 1100 for resource configuration is applied to an unlicensed frequency band, and includes: a transceiver unit 1110 and a processing unit 1120.

The transceiver unit 1110 is configured to receive resource configuration information sent by a network device.

The processing unit 1120 is configured to determine a plurality of time domain candidate resources and/or at least one frequency domain candidate resource according to the resource configuration information.

The plurality of time domain candidate resources and/or at least one frequency domain candidate resource are configured to send a sidelink synchronization signal block (S-SSB).

Optionally, the processing unit 1120 is configured to:
determine the plurality of time domain candidate resources according to time domain resource indication information in the resource configuration information.

Optionally, the time domain resource indication information includes: first time domain resource indication information, second time domain resource indication information and third time domain resource indication information.

The first time domain resource indication information is configured to indicate an offset of a first time domain candidate resource in a plurality of time domain candidate resources within an S-SSB cycle relative to a starting position of the S-SSB cycle.

The second time domain resource indication information is configured to indicate a time interval between each two time domain candidate resources in the plurality of time domain candidate resources within the S-SSB cycle.

The third time domain resource indication information is configured to indicate a number of the plurality of time domain candidate resources within the S-SSB cycle, in which the number of time domain candidate resources within the S-SSB cycle is greater than a number of S-SSBs supported to be sent with the SSB cycle.

Optionally, a target resource in the plurality of time domain candidate resources and/or at least one frequency domain candidate resource is configured to send the S-SSB, and the processing unit 1120 is configured to:
monitor the plurality of time domain candidate resources within the S-SSB cycle;
in which the target resource is at least one idle time domain candidate resource monitored.

Optionally, a number of idle time domain candidate resources monitored is equal to a number of S-SSBs within the S-SSB cycle, and the processing unit 1120 is further configured to:
send the S-SSBs within the S-SSB cycle on the target resource; and
stop monitoring remaining time domain candidate resources.

Optionally, a number of idle time domain candidate resources in the plurality of time domain candidate resources is less than a number of S-SSBs within the S-SSB cycle, and the processing unit 1120 is further configured to:
send a part of the S-SSBs within the S-SSB cycle on the idle time domain candidate resources.

Optionally, the time domain resource indication information includes: first time domain resource indication information, second time domain resource indication information and third time domain resource indication information.

The first time domain resource indication information is configured to indicate an offset of a first time domain candidate resource of a first time domain candidate resource group in a plurality of time domain candidate resource groups within an S-SSB cycle relative to a starting position of the S-SSB cycle, in which a number of time domain candidate resource groups within the S-SSB cycle is equal to a number of S-SSBs supported to be sent within the S-SSB cycle.

The second time domain resource indication information is configured to indicate a time interval between each two time domain candidate resource groups in the plurality of time domain candidate resource groups within the S-SSB cycle.

The third time domain resource indication information is configured to indicate a number of time domain candidate resources in each time domain candidate resource group within the S-SSB cycle, in which each time domain candidate resource group includes a plurality of consecutive time domain candidate resources, and a number of the plurality of consecutive time domain candidate resources is less than the number of S-SSBs supported to be sent within the S-SSB cycle.

Optionally, a target resource in the plurality of time domain candidate resources and/or at least one frequency domain candidate resource is configured to send the S-SSB, and the processing unit 1120 is configured to:
monitor time domain candidate resources in the plurality of time domain candidate resource groups within the S-SSB cycle;
in which the target resource is a first idle time domain candidate resource monitored in each time domain candidate resource group; and
stop monitoring time domain candidate resources located after the target resource in each time domain candidate resource group.

Optionally, each of the plurality of time domain candidate resource groups has an idle time domain candidate resource, and the processing unit 1120 is further configured to:
send, on the target resource in each time domain candidate resource group, an S-SSB corresponding to the time domain candidate resource group.

Optionally, the processing unit 1120 is further configured to:
not send an S-SSB corresponding to a busy time domain candidate resource group, in which each time domain candidate resource in the busy time domain candidate resource group is busy.

Optionally, the time domain resource indication information includes: first time domain resource indication information, second time domain resource indication information, third time domain resource indication information and fourth time domain resource indication information.

The first time domain resource indication information is configured to indicate an offset of a first time domain candidate resource of a first time domain candidate resource group in a plurality of time domain candidate resource groups within an S-SSB cycle relative to a starting position of the S-SSB cycle.

The second time domain resource indication information is configured to indicate a time interval between each two time domain candidate resource groups in the plurality of time domain candidate resource groups within the S-SSB cycle.

The third time domain resource indication information is configured to indicate a number of time domain candidate resources in each time domain candidate resource group within the S-SSB cycle, in which each time domain candidate resource group includes a plurality of consecutive time domain candidate resources, and a number of the plurality of consecutive time domain candidate resources is equal to a number of S-SSBs supported to be sent within the S-SSB cycle.

The fourth time domain resource indication information is configured to indicate a number of the plurality of time domain candidate resource groups within the S-SSB cycle.

Optionally, a target resource in the plurality of time domain candidate resources and/or at least one frequency domain candidate resource is configured to send the S-SSB, and the processing unit 1120 is configured to:
monitor time domain candidate resources in the plurality of time domain candidate resource groups within the S-SSB cycle;
in which the target resource includes a first idle time domain candidate resource monitored and subsequent time domain candidate resources of the first idle time domain candidate resource monitored, in the time domain candidate resources in the plurality of time domain candidate resource groups;
in which a total number of the first idle time domain candidate resource monitored and the subsequent time domain candidate resources is equal to the number of S-SSBs supported to be sent within the S-SSB cycle.

Optionally, the first idle time domain candidate resource monitored is the first time domain candidate resource in the first time domain candidate resource group, and the processing unit 1120 is further configured to:
send the S-SSBs within the S-SSB cycle on the plurality of consecutive time domain candidate resources in the first time domain candidate resource group; and
stop monitoring time domain candidate resources in remaining time domain candidate resource groups.

Optionally, the first idle time domain candidate resource monitored is an n^{th} time domain candidate resource in the first time domain candidate resource group, and the processing unit 1120 is further configured to:
send N-n+1 S-SSBs within the S-SSB cycle consecutively on the n^{th} time domain candidate resource in the first time domain candidate resource group and N-n time domain candidate resources subsequent to the n^{th} time domain candidate resource in the first time domain candidate resource group; in which 1<n<N, n is a positive integer, and N is the number of S-SSBs supported to be sent with the S-SSB cycle;
send remaining n-1 S-SSBs within the S-SSB cycle consecutively on idle time domain candidate resources monitored in a subsequent time domain candidate resource group; and
stop monitoring time domain candidate resources in remaining time domain candidate resource groups after the N S-SSBs are sent.

Optionally, the S-SSBs are consecutively sent on a plurality of consecutive time domain candidate resources, and the processing unit 1120 is further configured to:
in the plurality of consecutive time domain candidate resources, not perform listen-before-talk (LBT) on the subsequent time domain candidate resources of the first idle time domain candidate resource monitored.

Optionally, the S-SSBs are consecutively sent on a plurality of consecutive time domain candidate resources, and the processing unit 1120 is further configured to:
in the plurality of consecutive time domain candidate resources, perform listen-before-talk (LBT) on the subsequent time domain candidate resources of the first idle time domain candidate resource monitored.

Optionally, the processing unit 1120 is configured to:
determine the at least one frequency domain candidate resource according to frequency domain resource indication information in the resource configuration information.

Optionally, the frequency domain resource indication information includes: first frequency domain resource indication information and second frequency domain resource indication information.

The first frequency domain resource indication information is configured to indicate a frequency interval between each frequency domain candidate resource and a designated frequency domain resource in the at least one frequency domain candidate resource.

The second time domain resource indication information is configured to indicate a number of frequency domain candidate resources in the at least one frequency domain candidate resource.

Optionally, a target resource in the plurality of time domain candidate resources and/or at least one frequency domain candidate resource is configured to send the S-SSB, and the processing unit 1120 is configured to:
monitor the designated frequency domain resource; and
in response to monitoring that the designated frequency domain resource is busy, monitor the at least one frequency domain candidate resource;
in which the target resource is an idle frequency domain candidate resource monitored.

With the apparatus for resource configuration according to embodiments, by receiving the resource configuration information sent by the network device, multiple time domain candidate resources and/or at least one frequency domain candidate resource are determined according to the resource configuration information. The multiple time domain candidate resources and/or at least one frequency domain candidate resource are used to send the S-SSB. In this way, the terminal can determine multiple time domain candidate resources and send the S-SSBs on the multiple time domain candidate resources, which can greatly and effectively improve a success rate of transmitting the S-SSBs in the unlicensed frequency band, and improve system communication efficiency.

Referring to FIG. 12, FIG. 12 is a block diagram of an apparatus for resource configuration provided by an embodiment of the present invention.

As shown in FIG. 12, the apparatus 1200 for resource configuration is applied to an unlicensed frequency band, and includes a transceiver unit 1210.

The transceiver unit 1210 is configured to send resource configuration information to a terminal.

The resource configuration information is configured to determine a plurality of time domain candidate resources and/or at least one frequency domain candidate resource.

The plurality of time domain candidate resources and/or at least one frequency domain candidate resource are configured to send a sidelink synchronization signal block (S-SSB).

Optionally, the resource configuration information includes time domain resource indication information.

The time domain resource indication information is configured to determine the plurality of time domain candidate resources.

Optionally, the time domain resource indication information includes: first time domain resource indication information, second time domain resource indication information and third time domain resource indication information.

The first time domain resource indication information is configured to indicate an offset of a first time domain candidate resource in a plurality of time domain candidate resources within an S-SSB cycle relative to a starting position of the S-SSB cycle.

The second time domain resource indication information is configured to indicate a time interval between each two time domain candidate resources in the plurality of time domain candidate resources within the S-SSB cycle.

The third time domain resource indication information is configured to indicate a number of the plurality of time domain candidate resources within the S-SSB cycle, in which the number of time domain candidate resources within the S-SSB cycle is greater than a number of S-SSBs supported to be sent within the SSB cycle.

Optionally, the time domain resource indication information includes: first time domain resource indication information, second time domain resource indication information and third time domain resource indication information.

The first time domain resource indication information is configured to indicate an offset of a first time domain candidate resource of a first time domain candidate resource group in a plurality of time domain candidate resource groups within an S-SSB cycle relative to a starting position of the S-SSB cycle, in which a number of time domain candidate resource groups within the S-SSB cycle is equal to a number of S-SSBs supported to be sent within the S-SSB cycle.

The second time domain resource indication information is configured to indicate a time interval between each two time domain candidate resource groups in the plurality of time domain candidate resource groups within the S-SSB cycle.

The third time domain resource indication information is configured to indicate a number of time domain candidate resources in each time domain candidate resource group within the S-SSB cycle, in which each time domain candidate resource group includes a plurality of consecutive time domain candidate resources, and a number of the plurality of consecutive time domain candidate resources is less than the number of S-SSBs supported to be sent within the S-SSB cycle.

Optionally, the time domain resource indication information includes: first time domain resource indication information, second time domain resource indication information, third time domain resource indication information and fourth time domain resource indication information.

The first time domain resource indication information is configured to indicate an offset of a first time domain candidate resource of a first time domain candidate resource group in a plurality of time domain candidate resource groups within an S-SSB cycle relative to a starting position of the S-SSB cycle.

The second time domain resource indication information is configured to indicate a time interval between each two time domain candidate resource groups in the plurality of time domain candidate resource groups within the S-SSB cycle.

The third time domain resource indication information is configured to indicate a number of time domain candidate resources in each time domain candidate resource group within the S-SSB cycle, in which each time domain candidate resource group includes a plurality of consecutive time domain candidate resources, and a number of the plurality of consecutive time domain candidate resources is equal to a number of S-SSBs supported to be sent within the S-SSB cycle.

The fourth time domain resource indication information is configured to indicate a number of the plurality of time domain candidate resource groups within the S-SSB cycle.

Optionally, the resource configuration information includes frequency domain resource indication information.

The frequency domain resource indication information is configured to determine the at least one frequency domain candidate resource.

Optionally, the frequency domain resource indication information includes: first frequency domain resource indication information and second frequency domain resource indication information.

The first frequency domain resource indication information is configured to indicate a frequency interval between each frequency domain candidate resource and a designated frequency domain resource in the at least one frequency domain candidate resource.

The second time domain resource indication information is configured to indicate a number of the frequency domain candidate resources in the at least one frequency domain candidate resource.

With the apparatus for resource configuration according to embodiments, the resource configuration information can be sent to the terminal, the resource configuration information is used to determine multiple time domain candidate resources and/or at least one frequency domain candidate resource. The multiple time domain candidate resources and/or at least one frequency domain candidate resource are used to send the S-SSB. In this way, the terminal can determine multiple time domain candidate resources and send the S-SSBs on the multiple time domain candidate resources, which can greatly and effectively improve a success rate of transmitting the S-SSBs in the unlicensed frequency band, and improve system communication efficiency.

To implement the above embodiments, embodiments of the present invention also provide a communication device, including: a processor and a memory. A computer program is stored in the memory. The processor executes the computer program stored in the memory, so that the device performs the method shown in the embodiments of FIGs. 2 to 9.

To implement the above embodiments, embodiments of the present invention also provide a communication device, including: a processor and a memory. A computer program is stored in the memory. The processor executes the computer program stored in the memory, so that the device performs the method shown in the embodiments of FIG 10.

To implement the above embodiments, embodiments of the present invention also provide a communication device, including: a processor and an interface circuit. The interface circuit is configured to receive code instructions and transmit them to the processor. The processor is configured to run the code instructions to perform the method shown in the embodiments of FIGs. 2 to 9.

To implement the above embodiments, embodiments of the present invention also provide a communication device, including: a processor and an interface circuit. The interface circuit is configured to receive code instructions and transmit them to the processor. The processor is configured to run the code instructions to perform the method shown in the embodiments of FIG 10.

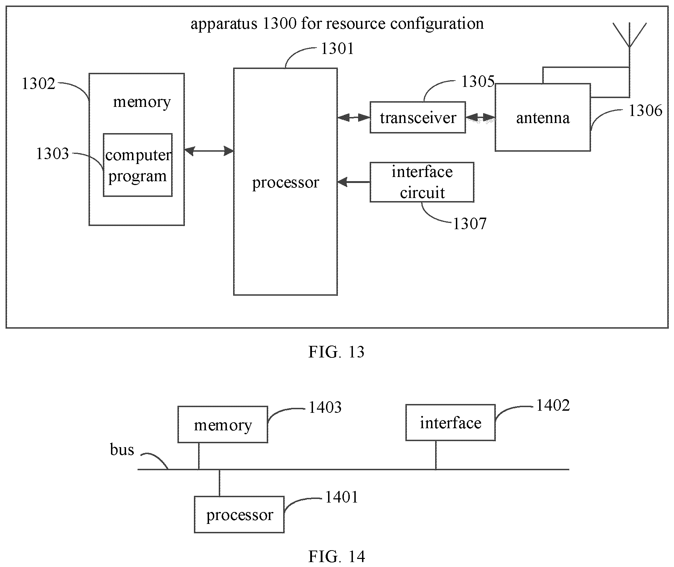

Referring to FIG. 13, FIG. 13 is a block diagram of an apparatus for resource configuration provided by an embodiment of the present invention. The apparatus 1300 for resource configuration can be a network device, a terminal, or can be a chip, a chip system, or a processor that supports the network device to implement the above method, or can be a chip, a chip system, or a processor that supports the terminal to implement the above method. The apparatus 1300 can be used to implement the methods described in the above method embodiments, as described in the above method embodiments.

The apparatus 1300 for resource configuration may include one or more processors 1301. The processor 1301 may be a general-purpose processor or a dedicated processor, such as, a baseband processor or a central processor. The baseband processor is used for processing communication protocols and communication data. The central processor is used for controlling the apparatus for resource configuration (e.g., a network device, a baseband chip, a terminal, a terminal chip, a distributed unit (DU), or a central unit (CU)), executing a computer program, and processing data of the computer program.

Optionally, the apparatus 1300 for resource configuration may include one or more memories 1302 on which a computer program 1303 may be stored. The processor 1301 executes the computer program 1303 to cause the apparatus 1300 for resource configuration to perform the methods described in the above method embodiments. The computer program 1303 may be solidified in the processor 1301, in which case the processor 1301 may be implemented by hardware.

Optionally, the memory 1302 may store data. The apparatus 1300 for resource configuration and the memory 1302 may be provided separately or may be integrated together.

Optionally, the apparatus 1300 for resource configuration may also include a transceiver 1305 and an antenna 1306. The transceiver 1305 may be referred to as a transceiver unit, a transceiver machine, or a transceiver circuit, for realizing a transceiver function. The transceiver 1305 may include a receiver and a transmitter. The receiver may be referred to as a receiving machine or a receiving circuit, etc., for realizing the receiving function. The transmitter may be referred to as a transmitter machine or a transmitting circuit, etc., for realizing the transmitting function.

Optionally, the apparatus 1300 for resource configuration may include one or more interface circuits 1307. The interface circuits 1307 are used to receive code instructions and transmit them to the processor 1301. The processor 1301 runs the code instructions to cause the apparatus 1300 for resource configuration to perform the method described in the method embodiments.

In an implementation, the processor 1301 may include a transceiver for implementing the receiving and sending functions. The transceiver may be, for example, a transceiver circuit, an interface, or an interface circuit. The transceiver circuit, the interface, or the interface circuit for implementing the receiving and sending functions may be separated or may be integrated together. The transceiver circuit, the interface, or the interface circuit described above may be used for reading and writing code/data, or may be used for signal transmission or delivery.

In an implementation, the apparatus 1300 for resource configuration may include circuits. The circuits may implement the sending, receiving or communicating function in the above method embodiments. The processor and the transceiver described in the invention may be implemented on integrated circuits (ICs), analog ICs, radio frequency integrated circuits (RFICs), mixed signal ICs, application specific integrated circuits (ASICs), printed circuit boards (PCBs), and electronic devices. The processor and the transceiver can also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The apparatus for resource configuration in the description of the above embodiments may be a network device or a terminal, but the scope of the apparatus for resource configuration described in the invention is not limited thereto, and the structure of the apparatus for resource configuration may not be limited by FIG. 11-FIG. 12. The apparatus for resource configuration may be a stand-alone device or may be part of a larger device. For example, the apparatus for resource configuration may be:
(1) a stand-alone IC, a chip, a chip system or a subsystem;
(2) a collection of ICs including one or more ICs, optionally, the collection of ICs may also include storage components for storing data and computer programs;
(3) an ASIC, such as a modem;
(4) a module that can be embedded within other devices;
(5) a receiver, a terminal, a smart terminal, a cellular phone, a wireless device, a handheld machine, a mobile unit, an in-vehicle device, a network device, a cloud device, an artificial intelligence device, and the like; and
(6) others.

For a case where the apparatus for resource configuration may be a chip or a chip system, FIG. 14 which is structural diagram of the chip may be referred to. The chip shown in FIG. 14 includes a processor 1401 and an interface 1402. There may be one or more processors 1401, and there may be multiple interfaces 1402.

For a case where the chip is used to implement the functions of the network device in the embodiments of the present invention:
the interface 1402 is used to obtain code instructions and transmit the code instructions to the processor; and
the processor 1401 is used to run the code instructions to perform the methods shown in FIGs. 2 to 9.

For a case where the chip is used to implement the functions of the terminal in the embodiments of the present invention:
the interface 1402 is used to obtain code instructions and transmit the code instructions to the processor; and
the processor 1401 is used to run the code instructions to perform the method as shown in FIG. 10.

Optionally, the chip further includes a memory 1403 used to store necessary computer programs and data.

It is understandable by those skilled in the art that various illustrative logical blocks and steps listed in the embodiments of the invention may be implemented by electronic hardware, computer software, or a combination of both. Whether such function is implemented by hardware or software depends on the particular application and the design requirements of the entire system. Those skilled in the art may, for each particular application, use various methods to implement the described functions, but such implementation should not be construed as being beyond the scope of protection of the embodiments of the invention.

Embodiments of the present invention also provide a communication system, which includes the apparatus for resource configuration acting as a terminal and the apparatus for resource configuration acting as a network device in the aforementioned embodiments of FIG. 11-FIG. 12, or the system includes the apparatus for resource configuration acting as a terminal and the apparatus for resource configuration acting as a network device in the aforementioned embodiment of FIG. 13.

The invention also provides a readable storage medium having instructions stored thereon. When the instructions are executed by a computer, the function of any of the method embodiments described above is implemented.

The invention also provides a computer program product. When the computer program product is executed by a computer, the function of any of the method embodiments described above is implemented.

The above embodiments may be implemented in whole or in part by software, hardware, firmware, or any combination thereof. When implemented using software, the above embodiments may be implemented, in whole or in part, in the form of a computer program product. The computer program product includes one or more computer programs. When loading and executing the computer program on a computer, all or part of processes or functions described in the embodiments of the invention are implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., using coaxial cables, fiber optics, or digital subscriber lines (DSLs)) or a wireless manner (e.g., using infrared wave, wireless wave, or microwave). The computer-readable storage medium may be any available medium to which the computer is capable to access or a data storage device such as a server integrated by one or more usable mediums and a data center. The available medium may be a magnetic medium (e.g., a floppy disk, a hard disk, and a tape), an optical medium (e.g., a high-density digital video disc (DVD)), or a semiconductor medium (e.g., a solid state disk (SSD)).

Those skilled in the art understands that the first, second, and other various numerical numbers involved in the invention are only described for the convenience of differentiation, and are not used to limit the scope of the embodiments of the invention, but to indicate the order of precedence.

The term "at least one" in the invention may also be described as one or more, and the term "multiple" may be two, three, four, or more, which is not limited in the invention. In the embodiments of the invention, for a type of technical features, "first", "second", and "third", and "A", "B", "C" and "D", are used to distinguish different technical features of the type, the technical features described using the "first", "second", and "third", and "A", "B", "C" and "D", do not indicate any order of precedence or magnitude.

The correspondence relationships shown in the tables in the invention can be configured or predefined. The values of information in each table are only examples and can be configured to other values, which are not limited by the invention. When configuring the correspondence relationships between information and various parameters, it is not necessary to configure all the correspondence relationships shown in each table. For example, in the tables in the invention, some correspondence relationships shown in certain rows may not be configured. For another example, appropriate deformation adjustments can be made based on the above table, such as splitting, merging, etc. The names of the parameters shown in the titles of the above tables can also use other names that can be understood by the communication device, and the values or representations of the parameters can be other values or representations that can be understood by the communication device. When implementing the above tables, other data structures can be used, such as arrays, queues, containers, stacks, linear tables, pointers, linked lists, trees, graphs, structures, classes, heaps, hash lists, or hash tables.

The term "predefine" in this invention may be understood as define, pre-define, store, pre-store, pre-negotiate, pre-configure, solidify, or pre-fire.

Those skilled in the art may realize that the units and steps of the various examples described with reference to the embodiments disclosed herein are capable of being implemented in the form of electronic hardware, or a combination of computer software and electronic hardware. Whether these functions are performed in hardware or software depends on the particular application and design constraints of the technical solution. Those skilled in the art may use different methods to implement the described functions for each particular application, but such implementations should not be considered as beyond the scope of the invention.

It is clearly understood by those skilled in the art that, for the convenience and brevity of description, the specific working processes of the systems, apparatuses, and units described above can be referred to the corresponding processes in the preceding method embodiments, which is not elaborated herein.

It should be understood that, various forms of processes shown above may be used, with steps reordered, added or deleted. For example, the various steps described in the embodiments of the present invention can be executed in parallel, sequentially, or in a different order. As long as the desired results of the technical solution disclosed in the present invention can be achieved, which is not limited herein.

The above-mentioned specific embodiments do not constitute a limitation on the scope of the present invention. It will be understood by those skilled in the art that various modifications, combinations, sub-combinations and substitutions can be made depending on design requirements and other factors. Any modifications, equivalent substitutions and improvements made within the spirit and principles of the present invention shall be included in the protection scope of the present invention.

## Claims

1. A method for resource configuration applied to an unlicensed frequency band, performed by a terminal, comprising:
receiving resource configuration information sent by a network device; and
determining a plurality of time domain candidate resources and/or at least one frequency domain candidate resource according to the resource configuration information;
wherein the plurality of time domain candidate resources and/or at least one frequency domain candidate resource are configured to send a sidelink synchronization signal block (S-SSB).

2. The method according to claim 1, wherein determining a plurality of time domain candidate resources according to the resource configuration information comprises:
determining the plurality of time domain candidate resources according to time domain resource indication information in the resource configuration information.

3. The method according to claim 2, wherein the time domain resource indication information comprises: first time domain resource indication information, second time domain resource indication information and third time domain resource indication information; wherein,
the first time domain resource indication information is configured to indicate an offset of a first time domain candidate resource in a plurality of time domain candidate resources within an S-SSB cycle relative to a starting position of the S-SSB cycle;
the second time domain resource indication information is configured to indicate a time interval between each two time domain candidate resources in the plurality of time domain candidate resources within the S-SSB cycle; and
the third time domain resource indication information is configured to indicate a number of the plurality of time domain candidate resources within the S-SSB cycle, wherein the number of time domain candidate resources within the S-SSB cycle is greater than a number of S-SSBs supported to be sent with the SSB cycle.

4. The method according to claim 3, wherein a target resource in the plurality of time domain candidate resources and/or at least one frequency domain candidate resource is configured to send the S-SSB, and the method further comprises:
monitoring the plurality of time domain candidate resources within the S-SSB cycle;
wherein the target resource is at least one idle time domain candidate resource monitored.

5. The method according to claim 4, wherein a number of idle time domain candidate resources monitored is equal to a number of S-SSBs within the S-SSB cycle, and the method further comprises:
sending the S-SSBs within the S-SSB cycle on the target resource; and
stopping monitoring remaining time domain candidate resources.

6. The method according to claim 4, wherein a number of idle time domain candidate resources in the plurality of time domain candidate resources is less than a number of S-SSBs within the S-SSB cycle, and the method further comprises:
sending a part of the S-SSBs within the S-SSB cycle on the idle time domain candidate resources.

7. The method according to claim 2, wherein the time domain resource indication information comprises: first time domain resource indication information, second time domain resource indication information and third time domain resource indication information; wherein,
the first time domain resource indication information is configured to indicate an offset of a first time domain candidate resource of a first time domain candidate resource group in a plurality of time domain candidate resource groups within an S-SSB cycle relative to a starting position of the S-SSB cycle, wherein a number of time domain candidate resource groups within the S-SSB cycle is equal to a number of S-SSBs supported to be sent within the S-SSB cycle;
the second time domain resource indication information is configured to indicate a time interval between each two time domain candidate resource groups in the plurality of time domain candidate resource groups within the S-SSB cycle; and
the third time domain resource indication information is configured to indicate a number of time domain candidate resources in each time domain candidate resource group within the S-SSB cycle, wherein each time domain candidate resource group comprises a plurality of consecutive time domain candidate resources, and a number of the plurality of consecutive time domain candidate resources is less than the number of S-SSBs supported to be sent within the S-SSB cycle.

8. The method according to claim 7, wherein a target resource in the plurality of time domain candidate resources and/or at least one frequency domain candidate resource is configured to send the S-SSB, and the method further comprises:
monitoring time domain candidate resources in the plurality of time domain candidate resource groups within the S-SSB cycle;
wherein the target resource is a first idle time domain candidate resource monitored in each time domain candidate resource group; and
stopping monitoring time domain candidate resources located after the target resource in each time domain candidate resource group.

9. The method according to claim 8, wherein each of the plurality of time domain candidate resource groups has an idle time domain candidate resource, and the method further comprises:
sending, on the target resource in each time domain candidate resource group, an S-SSB corresponding to the time domain candidate resource group.

10. The method of claim 8, further comprising:
not sending an S-SSB corresponding to a busy time domain candidate resource group, wherein each time domain candidate resource in the busy time domain candidate resource group is busy.

11. The method according to claim 2, wherein the time domain resource indication information comprises: first time domain resource indication information, second time domain resource indication information, third time domain resource indication information and fourth time domain resource indication information; wherein,
the first time domain resource indication information is configured to indicate an offset of a first time domain candidate resource of a first time domain candidate resource group in a plurality of time domain candidate resource groups within an S-SSB cycle relative to a starting position of the S-SSB cycle;
the second time domain resource indication information is configured to indicate a time interval between each two time domain candidate resource groups in the plurality of time domain candidate resource groups within the S-SSB cycle;
the third time domain resource indication information is configured to indicate a number of time domain candidate resources in each time domain candidate resource group within the S-SSB cycle, wherein each time domain candidate resource group comprises a plurality of consecutive time domain candidate resources, and a number of the plurality of consecutive time domain candidate resources is equal to a number of S-SSBs supported to be sent within the S-SSB cycle; and
the fourth time domain resource indication information is configured to indicate a number of the plurality of time domain candidate resource groups within the S-SSB cycle.

12. The method according to claim 11, wherein a target resource in the plurality of time domain candidate resources and/or at least one frequency domain candidate resource is configured to send the S-SSB, and the method further comprises:
monitoring time domain candidate resources in the plurality of time domain candidate resource groups within the S-SSB cycle;
wherein the target resource comprises a first idle time domain candidate resource monitored and subsequent time domain candidate resources of the first idle time domain candidate resource monitored, in the time domain candidate resources in the plurality of time domain candidate resource groups;
wherein a total number of the first idle time domain candidate resource monitored and the subsequent time domain candidate resources is equal to the number of S-SSBs supported to be sent within the S-SSB cycle.

13. The method according to claim 12, wherein the first idle time domain candidate resource monitored is the first time domain candidate resource in the first time domain candidate resource group, and the method further comprises:
sending the S-SSBs within the S-SSB cycle on the plurality of consecutive time domain candidate resources in the first time domain candidate resource group; and
stopping monitoring time domain candidate resources in remaining time domain candidate resource groups.

14. The method according to claim 12, wherein the first idle time domain candidate resource monitored is an n^{th} time domain candidate resource in the first time domain candidate resource group, and the method further comprises:
sending N-n+1 S-SSBs within the S-SSB cycle consecutively on the n^{th} time domain candidate resource in the first time domain candidate resource group and N-n time domain candidate resources subsequent to the n^{th} time domain candidate resource in the first time domain candidate resource group; wherein 1<n<N, n is a positive integer, and N is the number of S-SSBs supported to be sent with the S-SSB cycle;
sending remaining n-1 S-SSBs within the S-SSB cycle consecutively on idle time domain candidate resources monitored in a subsequent time domain candidate resource group; and
stopping monitoring time domain candidate resources in remaining time domain candidate resource groups after the N S-SSBs are sent.

15. The method according to claim 13 or 14, wherein the S-SSBs are consecutively sent on a plurality of consecutive time domain candidate resources, and the method further comprises:
in the plurality of consecutive time domain candidate resources, not performing listen-before-talk (LBT) on the subsequent time domain candidate resources of the first idle time domain candidate resource monitored.

16. The method according to claim 13 or 14, wherein the S-SSBs are consecutively sent on a plurality of consecutive time domain candidate resources, and the method further comprises:
in the plurality of consecutive time domain candidate resources, performing listen-before-talk (LBT) on the subsequent time domain candidate resources of the first idle time domain candidate resource monitored.

17. The method according to claim 1, wherein determining the at least one frequency domain candidate resource according to the resource configuration information comprises:
determining the at least one frequency domain candidate resource according to frequency domain resource indication information in the resource configuration information.

18. The method according to claim 17, wherein the frequency domain resource indication information comprises: first frequency domain resource indication information and second frequency domain resource indication information; wherein,
the first frequency domain resource indication information is configured to indicate a frequency interval between each frequency domain candidate resource and a designated frequency domain resource in the at least one frequency domain candidate resource; and
the second time domain resource indication information is configured to indicate a number of frequency domain candidate resources in the at least one frequency domain candidate resource.

19. The method according to claim 18, wherein a target resource in the plurality of time domain candidate resources and/or at least one frequency domain candidate resource is configured to send the S-SSB, and the method further comprises:
monitoring the designated frequency domain resource; and
in response to monitoring that the designated frequency domain resource is busy, monitoring the at least one frequency domain candidate resource;
wherein the target resource is an idle frequency domain candidate resource monitored.

20. A method for resource configuration applied to an unlicensed frequency band, performed by a network device, comprising:
sending resource configuration information to a terminal;
wherein the resource configuration information is configured to determine a plurality of time domain candidate resources and/or at least one frequency domain candidate resource; and
the plurality of time domain candidate resources and/or at least one frequency domain candidate resource are configured to send a sidelink synchronization signal block (S-SSB).

21. The method according to claim 20, wherein the resource configuration information comprises time domain resource indication information; and
the time domain resource indication information is configured to determine the plurality of time domain candidate resources.

22. The method according to claim 21, wherein the time domain resource indication information comprises: first time domain resource indication information, second time domain resource indication information and third time domain resource indication information; wherein,
the first time domain resource indication information is configured to indicate an offset of a first time domain candidate resource in a plurality of time domain candidate resources within an S-SSB cycle relative to a starting position of the S-SSB cycle;
the second time domain resource indication information is configured to indicate a time interval between each two time domain candidate resources in the plurality of time domain candidate resources within the S-SSB cycle; and
the third time domain resource indication information is configured to indicate a number of time domain candidate resources within the S-SSB cycle, wherein the number of the plurality of time domain candidate resources within the S-SSB cycle is greater than a number of S-SSBs supported to be sent within the SSB cycle.

23. The method according to claim 21, wherein the time domain resource indication information comprises: first time domain resource indication information, second time domain resource indication information and third time domain resource indication information; wherein,
the first time domain resource indication information is configured to indicate an offset of a first time domain candidate resource of a first time domain candidate resource group in a plurality of time domain candidate resource groups within an S-SSB cycle relative to a starting position of the S-SSB cycle, wherein a number of time domain candidate resource groups within the S-SSB cycle is equal to a number of S-SSBs supported to be sent within the S-SSB cycle;
the second time domain resource indication information is configured to indicate a time interval between each two time domain candidate resource groups in the plurality of time domain candidate resource groups within the S-SSB cycle; and
the third time domain resource indication information is configured to indicate a number of time domain candidate resources in each time domain candidate resource group within the S-SSB cycle, wherein each time domain candidate resource group comprises a plurality of consecutive time domain candidate resources, and a number of the plurality of consecutive time domain candidate resources is less than the number of S-SSBs supported to be sent within the S-SSB cycle.

24. The method according to claim 21, wherein the time domain resource indication information comprises: first time domain resource indication information, second time domain resource indication information, third time domain resource indication information and fourth time domain resource indication information; wherein,
the first time domain resource indication information is configured to indicate an offset of a first time domain candidate resource of a first time domain candidate resource group in a plurality of time domain candidate resource groups within an S-SSB cycle relative to a starting position of the S-SSB cycle;
the second time domain resource indication information is configured to indicate a time interval between each two time domain candidate resource groups in the plurality of time domain candidate resource groups within the S-SSB cycle;
the third time domain resource indication information is configured to indicate a number of time domain candidate resources in each time domain candidate resource group within the S-SSB cycle, wherein each time domain candidate resource group comprises a plurality of consecutive time domain candidate resources, and a number of the plurality of consecutive time domain candidate resources is equal to a number of S-SSBs supported to be sent within the S-SSB cycle; and
the fourth time domain resource indication information is configured to indicate a number of the plurality of time domain candidate resource groups within the S-SSB cycle.

25. The method according to claim 20, wherein the resource configuration information comprises frequency domain resource indication information; and
the frequency domain resource indication information is configured to determine the at least one frequency domain candidate resource.

26. The method according to claim 25, wherein the frequency domain resource indication information comprises: first frequency domain resource indication information and second frequency domain resource indication information; wherein,
the first frequency domain resource indication information is configured to indicate a frequency interval between each frequency domain candidate resource and a designated frequency domain resource in the at least one frequency domain candidate resource; and
the second time domain resource indication information is configured to indicate a number of the frequency domain candidate resources in the at least one frequency domain candidate resource.

27. An apparatus for resource configuration applied to an unlicensed frequency band, comprising:
a transceiver unit, configured to receive resource configuration information sent by a network device; and
a processing unit, configured to determine a plurality of time domain candidate resources and/or at least one frequency domain candidate resource according to the resource configuration information;
wherein the plurality of time domain candidate resources and/or at least one frequency domain candidate resource are configured to send a sidelink synchronization signal block (S-SSB).

28. An apparatus for resource configuration applied to an unlicensed frequency band, comprising:
a transceiver unit, configured to send resource configuration information to a terminal;
wherein the resource configuration information is configured to determine a plurality of time domain candidate resources and/or at least one frequency domain candidate resource;
the plurality of time domain candidate resources and/or at least one frequency domain candidate resource are configured to send a sidelink synchronization signal block (S-SSB).

29. A communication device, comprising a processor and a memory having a computer program stored therein, wherein the processor is configured to execute the computer program stored in the memory, to cause the communication device to perform the method according to any one of claims 1 to 19.

30. A communication device, comprising a processor and a memory having a computer program stored therein, wherein the processor is configured to execute the computer program stored in the memory, to cause the communication device to perform the method according to any one of claims 20 to 26.

31. A communication device, comprising: a processor and an interface circuit; wherein
the interface circuit is configured to receive code instructions and transmit the code instructions to the processor;
the processor is configured to run the code instructions to perform the method according to any one of claims 1 to 19.

32. A communication device, comprising: a processor and an interface circuit; wherein
the interface circuit is configured to receive code instructions and transmit the code instructions to the processor;
the processor is configured to run the code instructions to perform the method according to any one of claims 20 to 26.

33. A computer-readable storage medium for storing instructions, wherein, when the instructions are executed, the method according to any one of claims 1 to 19 is implemented.

34. A computer-readable storage medium for storing instructions, wherein, when the instructions are executed, the method according to any one of claims 20 to 26 is implemented.
